# EUROPEAN PATENT APPLICATION

(11) **EP 3 174 336 A1**
(43) Date of publication of application: **31.05.2017**
(21) Application number: 15824056.4
(22) Date of filing: 08.04.2015
(51) Int. Cl.: H04W 36/00, H04W 36/14

(54) **METHOD AND DEVICE FOR IMPLEMENTING FLOW MOBILITY TRIGGERING, AND STORAGE MEDIUM**

(30) Priority: 24.07.2014 CN 201410355787
(71) Applicant: ZTE Corporation, Shenzhen, Guangdong 518057 (CN)
(72) Inventor: ZHOU, Xingyue, Shenzhen Guangdong 518057 (CN); ZHOU, Xiaoyun, Shenzhen Guangdong 518057 (CN)
(74) Representative: HGF Limited
(86) International application number: PCT/CN2015/076098
(87) International publication number: WO 2016/011832

(57) **Abstract**

The present invention discloses a method for implementing flow mobility triggering, including: a User Equipment (UE) transmitting information related to a flow mobility operation mode to a network side, herein the information related to the flow mobility operation mode is used by the network side to decide the flow mobility operation mode, and receiving indication information of the flow mobility operation mode decided by the network side. The present invention further discloses another method and device for implementing flow mobility triggering and a storage medium at the same time.

## Description

### Technical Field

The present invention relates to service flow processing techniques in communications and in particular, to a method and device for implementing flow mobility triggering and a storage medium.

### Background

As the Wireless Local Area Networks (WLANs) access technology increasingly mature, and users' requirements for high-speed wireless access networks increase, domestic and foreign operators are vigorously developing WLAN services which, as a flow splitting means for a cellular data network, also have an increasingly important role.

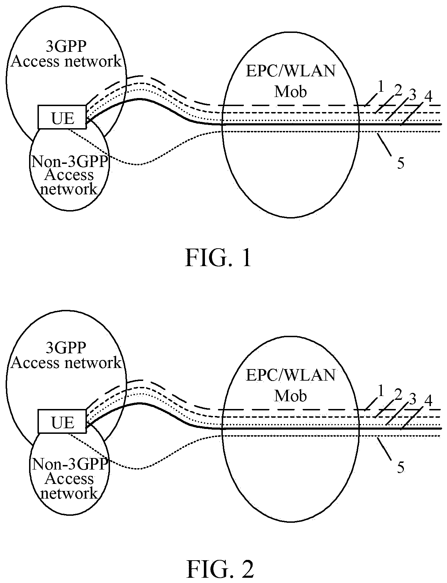

The IP Flow Mobility (IFOM) technology can achieve mobility of IP service flows between different access systems. A User equipment (UE) can modify a service flow routing path according to network congestion conditions and policies to ensure the communication quality and improve the user experience. A principle diagram of flow mobility is shown in Fig. 1, in which a UE is connected to the same Packet Data Network (PDN) through a 3rd Generation Partnership Project (3GPP) access system and a non-3GPP (such as a WLAN) access system. Service flows passing through the 3GPP network include a Web service flow and a File Transfer Protocol (FTP) flow. Herein, line 1 represents an IP voice (VoIP) service flow, line 2 represents a conventional video (Conv.video) service flow, line 3 represents a non-conventional video (Non-conv.video) service flow, line 4 represents a Web webpage service flow, and line 5 represents a FTP file transfer service flow. When the UE moves to an area with weak WLAN signal coverage, the quality of the service flow transmitted through the WLAN is influenced, and at this time, the UE initiates an IFOM flow of mobility of the Web flow from the WLAN to the 3GPP to ensure the transmission quality of the Web application. A principle diagram of flow mobility after mobility of the Web flow is successful is shown in Fig. 2, in which a path of the Web service flow is changed to be transmitted through the 3GPP network.

According to a type of a mobility management protocol used by a user, the IFOM is divided into a host-based mobility management protocol, such as IFOM based on Dual-Stack Mobile IPv6 (DSMIPv6) and Network-based IP flow mobility (NB-IFOM) such as flow mobility based on GPRS Tunnelling Protocol/Proxy Mobile IPv6 (GTP/PMIPv6GPRS). Herein, the IFOM scheme based on DSMIPv6 has been supported by the 3GPP. Specifically, the UE and the network negotiate IFOM information through signaling of DSMIPv6. After completing the signaling negotiation, the UE and the network modify and update corresponding IFOM routing rule information. Here, the initiation of IFOM based on DSMIPv6 is performed by the UE side; and the UE can access to the same Packet Data Network Gateway (P-GW) simultaneously through a 3GPP access network and a non-3GPP access network (such as a WLAN access network). The P-GW allocates an IP address to the UE. The allocated IP address is used on the 3GPP network and the non-3GPP network at the same time to support the mobility of the service data flow between the 3GPP network and the non-3GPP network. For example, when the UE access to the 3GPP network and the non-3GPP network at the same time, if after the UE moves, it is not located in a coverage of the non-3GPP network but is still in a coverage of the 3GPP network, services which are accessed through the non-3GPP network can be moved to the 3GPP network; or when the non-3GPP network is congested, the UE can move services with high real-time requirements to the 3GPP network.

At present, the 3GPP is researching on IFOM supporting NB-IFOM. Specifically, the UE establishes a PDN connection on an Evolved Packet Core (EPC) over a 3GPP network and a non-3GPP network (such as a WLAN) using GTP/PMIPv6, allocates the same IP address on the 3GPP network and the non-3GPP network, a flow mobility policy may be updated between the UE and the network, and flow mobility is achieved on the 3GPP network and the non-3GPP network. In this process, the UE notifies the network that the currently established connection is established for the IFOM and when the network supports the IFOM, an IFOM indication is returned to the UE. The update of the IFOM policy, such as, new addition, deletion, or modification, may be initiated by the UE side or may also be initiated by the network side.

A scenario in which IFOM is initiated by a UE side includes: the UE initiating an IFOM request to a network according to an IFOM update policy provided by an Access Network Discovery and Selection Function (ANDSF), the UE sensing a change in an air interface environment at a first time, initiating an IFOM request according to signal strength, implementing update of configuration and initiating an IFOM request on the UE etc.; and a scenario in which IFOM is initiated by a network side includes: the network side initiating an IFOM request according to an operator's pre-configuration policy, an operator updating an IFOM policy according to a current congestion condition at the network side, initiating an IFOM request etc. However, the scenarios in which IFOM is initiated by a UE side and IFOM is initiated by a network side have different requirements, and how to implement work negotiation between the UE side-triggered IFOM and the network side-triggered IFOM is a problem which is not solved currently.

### Summary

In view of this, the embodiments of the present invention are intended to provide a method and a device for implementing flow mobility triggering and a storage medium, which can negotiate that the flow mobility operation mode is initiation by a network side or initiation by a UE.

The technical solutions according to the embodiments of the present invention are achieved as follows.

The embodiments of the present invention provide a method for implementing flow mobility triggering, including: in a process of establishing a packet data network,
a User Equipment (UE) transmitting information related to a flow mobility operation mode to a network side, herein the information related to the flow mobility operation mode is used by the network side to decide the flow mobility operation mode, and receiving indication information of the flow mobility operation mode decided by the network side.

In the above solution, the information related to the flow mobility operation mode includes: a flow mobility operation mode supported by the UE or a request for a flow mobility operation mode; herein,
the flow mobility operation mode supported by the UE includes UE-initiated flow mobility supported by the UE, network-initiated flow mobility supported by the UE, and UE-initiated flow mobility and network-initiated flow mobility supported by the UE.

In the above solution, in an Extensible Authentication Protocol (EAP) authentication and authorization phase in which the UE establishes a Packet Data Network (PDN) connection through a Trusted Wireless Access Network (TWAN) for implementation of Network-Based IP Flow Mobility (NB-IFOM), the UE and the network side use a single connection mode, the UE transmitting the information related to the flow mobility operation mode includes the UE transmitting the information related to the flow mobility operation mode to the network side, herein the information is carried in an EAP message; and/or
receiving the indication information of the flow mobility operation mode decided by the network side includes: the UE receiving the indication information of the flow mobility operation mode decided by the network side which is transmitted by the network side, herein the indication information is carried in an Authentication and Key Agreement (AKA') notification message.

In the above solution, the UE establishes a PDN connection through an untrusted WLAN access Network for implementation of NB-IFOM, the UE transmitting the information related to the flow mobility operation mode includes the UE transmitting the information related to the flow mobility operation mode to the network side, herein the information is carried in an Internet Key Exchange Authentication (IKE_AUTH) request message or is carried in an IKEv2 message; and/or
receiving the indication information of the flow mobility operation mode decided by the network side includes: the UE receiving the indication information of the flow mobility operation mode decided by the network side which is transmitted by the network side, herein the indication information is transmitted by a PDN GateWay (PGW) to the UE via an ePDG which carries the indication information in an IKE_AUTH response message.

In the above solution, the UE is initially attached to an Evolved Packet System (EPS) network via an Evolved Universal Terrestrial Radio Access Network (E-UTRAN), the UE transmitting the information related to the flow mobility operation mode includes: the UE transmitting the information related to the flow mobility operation mode to a Mobility Management Element (MME), herein the information is included and carried in an NAS message; and/or
receiving the indication information of the flow mobility operation mode decided by the network side includes: the UE receiving the indication information of the flow mobility operation mode decided by the network side which is transmitted by the MME, herein the indication information is carried in an attachment acceptance message.

In the above solution, when the UE establishes a PDN connection through a TWAN for implementation of NB-IFOM, the UE and the network side use a multi-connection mode, the UE transmitting the information related to the flow mobility operation mode includes: the UE transmitting the information related to the flow mobility operation mode to a Packet Data Network GateWay (PDN GW), herein the information is carried in a Wireless Local Control Plane Packet Data Network (WLCP PDN) connection establishment request message; and/or
receiving the indication information of the flow mobility operation mode decided by the network side includes: the UE receiving the indication information of the flow mobility operation mode decided by the network side which is transmitted by the PDN GW or a Policy and Charging Rules Function (PCRF), herein the indication information is carried in a session establishment response message or proxy binding acknowledgement message.

The embodiments of the present invention further provide a method for implementing flow mobility triggering, including: in a process of establishing a packet data network, a network side deciding a flow mobility operation mode; and
transmitting indication information of the decided flow mobility operation mode to a User Equipment (UE), herein the indication information is used to notify the UE of a manner of initiating modification of a service flow routing rule, which includes initiating modification of the service flow routing rule by the UE and/or initiating modification of the service flow routing rule by the network side.

In the above solution, in an Extensible Authentication Protocol (EAP) authentication and authorization phase in which the UE establishes a Packet Data Network (PDN) connection through a Trusted Wireless Access Network (TWAN) for implementation of Network-Based IP Flow Mobility (NB-IFOM), the UE and the network side use a single connection mode, the network side deciding a flow mobility operation mode includes a Packet Data Network GateWay (PDN GW) or a Policy and Charging Rules Function (PCRF) at the network side deciding the flow mobility operation mode; and/or
the network side transmitting indication information of the decided flow mobility operation mode includes the PDN GW or PCRF at the network side carrying the decided flow mobility operation mode in an EAP message and transmitting it to the UE through a TWAN and a 3GPP Authentication Authorization Accounting (AAA) server.

In the above solution, the UE establishes a PDN connection through an untrusted WLAN access network for implementation of NB-IFOM, the network side deciding a flow mobility operation mode includes a PDN GW or a PCRF at the network side deciding the flow mobility operation mode; and/or
the network side transmitting indication information of the decided flow mobility operation mode includes the PDN GW or PCRF at the network side carrying the decided flow mobility operation mode in an IKEv2 message and transmitting it to the UE through an ePDG.

In the above solution, the UE is initially attached to an Evolved Packet System (EPS) network via an Evolved Universal Terrestrial Radio Access Network (E-UTRAN), the network side deciding a flow mobility operation mode includes a PDN GW or a PCRF at the network side deciding the flow mobility operation mode; and/or
the network side transmitting indication information of the decided flow mobility operation mode includes the PDN GW at the network side transmitting the decided flow mobility operation mode to the UE through a session establishment response message via a Serving Gateway (S-GW) and an MME; or the PCRF at the network side transmitting the decided flow mobility operation mode to the PDN GW, and the PDN GW transmitting it to the UE through a session establishment response message via a Serving Gateway (S-GW) and an MME.

In the above solution, the UE establishes a PDN connection through a TWAN for implementation of NB-IFOM, the UE and the network side use a multi-connection mode, the network side deciding a flow mobility operation mode includes a PDN GW or a PCRF at the network side deciding the flow mobility operation mode; and/or
the network side transmitting indication information of the decided flow mobility operation mode includes the PDN GW or PCRF at the network side transmitting the decided flow mobility operation mode to the UE through an EAP or WLCP message via a TWAN.

In the above solution, in an EAP authentication and authorization phase in which the UE establishes a PDN connection through a TWAN for implementation of NB-IFOM, the UE and the network side use a single connection mode, the network side deciding a flow mobility operation mode includes a 3GPP Authentication Authorization Accounting (AAA) server at the network side deciding the flow mobility operation mode; and/or
the network side transmitting indication information of the decided flow mobility operation mode includes the 3GPP AAA server at the network side carrying the decided flow mobility operation mode in an Authentication and Key Agreement (AKA') notification message and transmitting it to the UE through a TWAN.

In the above solution, the UE establishes a PDN connection through an untrusted WLAN for implementation of NB-IFOM, the network side deciding a flow mobility operation mode includes a 3GPP AAA server at the network side deciding the flow mobility operation mode; and
the network side transmitting indication information of the decided flow mobility operation mode includes the 3GPP AAA server at the network side carrying the decided flow mobility operation mode in an EAP AKA message and transmitting it to the UE through an ePDG.

The embodiments of the present invention further provide a UE, including: a first transmission module and a first reception module, herein
the first transmission module is arranged to transmit information related to a flow mobility operation mode to a network side, herein the information related to the flow mobility operation mode is used by a network side to decide the flow mobility operation mode, and
the first reception module is arranged to receive indication information of the flow mobility operation mode decided by the network side.

In the above solution, the information related to the flow mobility operation mode includes: a flow mobility operation mode supported by the UE or a request for a flow mobility operation mode; herein,
the flow mobility operation mode supported by the UE includes UE-initiated flow mobility supported by the UE, network-initiated flow mobility supported by the UE, and UE-initiated flow mobility and network-initiated flow mobility supported by the UE.

In the above solution, in an Extensible Authentication Protocol (EAP) authentication and authorization phase in which the UE establishes a Packet Data Network (PDN) connection through a Trusted Wireless Access Network (TWAN) for implementation of Network-Based IP Flow Mobility (NB-IFOM), the UE and the network side use a single connection mode,
the first transmission module is further arranged to transmit the information related to the flow mobility operation mode to the network side, herein the information is carried in an EAP message; and/or
the first reception module is further arranged to receive the indication information of the flow mobility operation mode decided by the network side which is transmitted by the network side, herein the indication information is carried in an Authentication and Key Agreement (AKA') notification message.

In the above solution, the UE establishes a PDN connection through an untrusted WLAN for implementation of NB-IFOM, the first transmission module is specifically arranged to transmit the information related to the flow mobility operation mode to the network side, herein the information is carried in an Internet Key Exchange Authentication (IKE_AUTH) request message or is carried in an IKEv2 message; and/or
the first reception module is further arranged to receive the indication information of the flow mobility operation mode decided by the network side which is transmitted by the network side, herein the indication information is transmitted by a PDN GateWay (PGW) to the UE via an ePDG which carries the indication information in an IKE_AUTH response message.

In the above solution, when the network side performs dynamic IP mobility management and selection, the IKE AUTH request message is transmitted by the UE to the ePDG.

In the above solution, the UE is initially attached to an Evolved Packet System (EPS) network via an Evolved Universal Terrestrial Radio Access Network (E-UTRAN), the first transmission module is further arranged to transmit the information related to the flow mobility operation mode to a Mobility Management Element (MME), herein the information is carried in an NAS message; and/or
the first reception module is further arranged to receive the indication information of the flow mobility operation mode decided by the network side which is transmitted by the MME, herein the indication information is carried in an attachment acceptance message.

In the above solution, when the UE establishes a PDN connection through a TWAN for implementation of NB-IFOM, the UE and the network side use a multi-connection mode, the first transmission module is further arranged to transmit the information related to the flow mobility operation mode to a Packet Data Network GateWay (PDN GW), herein the information is carried in a Wireless Local Control Plane Packet Data Network (WLCP PDN) connection establishment request message; and/or
the first reception module is further arranged to receive the indication information of the flow mobility operation mode decided by the network side which is transmitted by the PDN GW or a Policy and Charging Rules Function (PCRF), herein the indication information is carried in a session establishment response message or proxy binding acknowledgement message.

The embodiments of the present invention further provide a device for implementing flow mobility triggering, including: a first decision module and a second transmission module, herein
the first decision module is arranged to decide indication information of a flow mobility operation mode; and
the second transmission module is arranged to transmit indication information of the decided flow mobility operation mode to a User Equipment (UE), herein the indication information is used by the UE to modify a service flow routing path.

In the above solution, the device further includes: a second reception module arranged to receive information related to the flow mobility operation mode.

In the above solution, in an EAP authentication and authorization phase in which the UE establishes a PDN connection through a TWAN for implementation of NB-IFOM, the UE and the network side use a single connection mode, and when the device is a PDN GW, the second transmission module is arranged to carry the decided flow mobility operation mode in an EAP message and transmit it to the UE through a TWAN and a 3GPP AAA server.

In the above solution, in an EAP authentication and authorization phase in which the UE establishes a PDN connection through a TWAN for implementation of NB-IFOM, the UE and the network side use a single connection mode, and when the device is a PCRF, the second transmission module is further used to carry the decided flow mobility operation mode in an EAP message and transmit it to the UE through a PDN GW, a TWAN and a 3GPP AAA server.

In the above solution, the UE establishes a PDN connection through an untrusted WLAN for implementation of NB-IFOM, and when the device is a PDN GW, the second transmission module is arranged to carry the decided flow mobility operation mode in an IKEv2 message and transmit it to the UE through an ePDG.

In the above solution, the UE establishes a PDN connection through an untrusted WLAN for implementation of NB-IFOM, and when the device is a PCRF, the second transmission module is further used to carry the decided flow mobility operation mode in an IKEv2 message and transmit it to the UE through a PDN GW and an ePDG.

In the above solution, the UE is initially attached to an Evolved Packet System (EPS) network via an Evolved Universal Terrestrial Radio Access Network (E-UTRAN), and when the device is a PDN GW F, the second transmission module is arranged to carry the decided flow mobility operation mode in a Protocol Configuration Options (PCO) information element or as an independent information element, and transmit it to the UE through a session establishment response message via a Serving Gateway (S-GW) and an MME.

In the above solution, the UE is initially attached to an EPS network via an E-UTRAN, and when the device is a PCRF, the second transmission module is further used to carry the decided flow mobility operation mode in a PCO information element or as an independent information element, and transmit it to the UE via a PDN GW, an S-GW and an MME.

In the above solution, the UE establishes a PDN connection through a TWAN for implementation of NB-IFOM, the UE and the network side use a multi-connection mode, and when the device is a PDN GW, the second transmission module is further used to carry the decided flow mobility operation mode in a PCO information element or as an independent information element, and transmit it to the UE through an EAP or WLCP message via a TWAN.

In the above solution, the UE establishes a PDN connection through a TWAN for implementation of NB-IFOM, the UE and the network side use a multi-connection mode, and when the device is a PCRF, the second transmission module is further used to carry the decided flow mobility operation mode in a PCO information element or as an independent information element, and transmit it to the UE through an EAP or WLCP message via a TWAN.

In the above solution, in an EAP authentication and authorization phase in which the UE establishes a PDN connection through a TWAN for implementation of NB-IFOM, the UE and the network side use a single connection mode, and when the device is a 3GGP Authentication Authorization Accounting (AAA) server, the second transmission module is arranged to carry the decided flow mobility operation mode in an EAP message and transmit it to the UE through a TWAN.

In the above solution, the UE establishes a PDN connection through an untrusted WLAN for implementation of NB-IFOM, and when the device is a 3GGP AAA server, the second transmission module is arranged to carry the decided flow mobility operation mode in an EAP AKA message and transmit it to the UE through an ePDG.

The embodiments of the present invention further provide a computer storage medium having stored therein computer-executable instructions for performing the above-described method for implementing flow mobility triggering according to the embodiments of the present invention.

In the method and device for implementing flow mobility triggering and a storage medium according to the embodiments of the present invention, a network side decides a flow mobility operation mode and transmits indication information of the decided flow mobility operation mode to the UE. The UE receives the indication information of the flow mobility operation mode decided by the network side, or the UE transmits the information related to the flow mobility operation mode supported by the UE to the network side. The network side receives the information related to the flow mobility operation mode supported by the UE which is transmitted by the UE, decides the flow mobility operation mode according to the information related to the flow mobility operation mode supported by the UE, and transmits the indication information of the decided flow mobility operation mode to the UE. The UE receives the indication information of the flow mobility operation mode decided by the network side; herein, the information related to the flow mobility operation mode includes: a flow mobility operation mode supported by the UE or a request for a flow mobility operation mode. In this manner, negotiation of the flow mobility operation mode between the UE and the network side can be achieved.

### Brief Description of Drawings

Fig. 1 is a principle diagram of flow mobility;
Fig. 2 is a principle diagram of flow mobility after mobility of a Web flow is successful;
Fig. 3 is a diagram of architecture of deployment of a TWAN accessing an EPC network;
Fig. 4 is a structural diagram of constitution of a TWAN;
Fig. 5 is a basic flowchart of a method for implementing flow mobility triggering at a UE side according to an embodiment of the present invention;
Fig. 6 is a detailed flowchart of a method for implementing flow mobility triggering at a UE side according to embodiment one of the present invention;
Fig. 7 is a detailed flowchart of a method for implementing flow mobility triggering at a UE side according to embodiment two of the present invention;
Fig. 8 is a detailed flowchart of a method for implementing flow mobility triggering at a UE side according to embodiment three of the present invention;
Fig. 9 is a detailed flowchart of a method for implementing flow mobility triggering at a UE side according to embodiment four of the present invention;
Fig. 10 is a detailed flowchart of a method for implementing flow mobility triggering at a UE side according to embodiment five of the present invention;
Fig. 11 is a detailed flowchart of a method for implementing flow mobility triggering at a UE side according to embodiment six of the present invention;
Fig. 12 is a basic flowchart of a method for implementing flow mobility triggering at a network side according to an embodiment of the present invention;
Fig. 13 is a basic flowchart of a method for implementing flow mobility triggering at a network side according to embodiment seven of the present invention;
Fig. 14 is a basic flowchart of a method for implementing flow mobility triggering at a network side according to embodiment eight of the present invention;
Fig. 15 is a basic flowchart of a method for implementing flow mobility triggering at a network side according to embodiment nine of the present invention;
Fig. 16 is a basic flowchart of a method for implementing flow mobility triggering at a network side according to embodiment ten of the present invention;
Fig. 17 is a basic flowchart of a method for implementing flow mobility triggering at a network side according to embodiment eleven of the present invention;
Fig. 18 is a basic flowchart of a method for implementing flow mobility triggering at a network side according to embodiment twelve of the present invention;
Fig. 19 is a detailed flowchart of a method for implementing flow mobility triggering at a UE side and a network side according to embodiment thirteen of the present invention;
Fig. 20 is a detailed flowchart of a method for implementing flow mobility triggering at a UE side and a network side according to embodiment fourteen of the present invention;
Fig. 21 is a detailed flowchart of a method for implementing flow mobility triggering at a UE side and a network side according to embodiment fifteen of the present invention;
Fig. 22 is a detailed flowchart of a method for implementing flow mobility triggering at a UE side and a network side according to embodiment sixteen of the present invention;
Fig. 23 is a detailed flowchart of a method for implementing flow mobility triggering at a UE side and a network side according to embodiment seventeen of the present invention;
Fig. 24 is a detailed flowchart of a method for implementing flow mobility triggering at a UE side and a network side according to embodiment eighteen of the present invention;
Fig. 25 is a structural diagram of constitution of a UE according to an embodiment of the present invention; and
Fig. 26 is a structural diagram of constitution of a device for implementing flow mobility triggering according to an embodiment of the present invention.

### Specific Embodiments

In the embodiments of the present invention, a network side decides a flow mobility operation mode and transmits indication information of the decided flow mobility operation mode to the UE. The UE receives the indication information of the flow mobility operation mode decided by the network side, or the UE transmits the information related to the flow mobility operation mode supported by the UE to the network side. The network side receives the information related to the flow mobility operation mode supported by the UE which is transmitted by the UE, decides the flow mobility operation mode according to the information related to the flow mobility operation mode supported by the UE, and transmits the indication information of the decided flow mobility operation mode to the UE. The UE receives the indication information of the flow mobility operation mode decided by the network side.

Herein, the information related to the flow mobility operation mode includes: a flow mobility operation mode supported by the UE or a request for a flow mobility operation mode; herein, the flow mobility operation mode supported by the UE includes UE-initiated flow mobility supported by the UE, network-initiated flow mobility supported by the UE, and UE-initiated flow mobility and network-initiated flow mobility supported by the UE. The indication information is used by the UE to modify a service flow routing path.

For a better understanding of the technical solutions described in the present embodiment, related knowledge of access of a TWAN to an EPC network will be described below.

A 3GPP Evolved Packet System (EPS) is included of an E-UTRAN, an MME, a Serving Gateway (S-GW), a P-GW or a PDN GW, a Home Subscriber Server (HSS), a Policy and Charging Rules Function (PCRF) entity and other supporting nodes.

The 3GPP has studied the support of using WLAN as a trusted access network from the Rel-11 stage to provide a UE with a connection to an EPC. In the Rel-11 stage, it mainly studies a scheme which has no influence on the UE. The UE can only establish a single packet data connection through the WLAN network and does not support combination of packet data connections by the UE between the WLAN access network and the 3GPP access network. Herein, a single packet data connection established through the WLAN network may be a packet data connection to an EPC network, or a Non-seamless WLAN offload (NSWO) connection, directly from the WLAN network to the data network.

At present, the 3GPP is studying in Rel-12 stage a scheme that supports access of a TWAN to an EPC network and has influence on the user equipment. This scheme is required to be compatible with an S2a Mobility Over Trusted WLAN access to EPC (R11SaMOG) scheme, support flows such as a multi-PDN connection, switching etc., support transfer of information such as an Access Point Name (APN), a PDN type etc., and support a scenario in which access to an EPC network through a WLAN and WLAN service flow splitting are achieved at the same time. The UE can indicates to the network side whether the UE supports access to an EPC network or an NSWO network, and the network side can indicate to the UE a decision result of access to the EPC network or the NSWO.

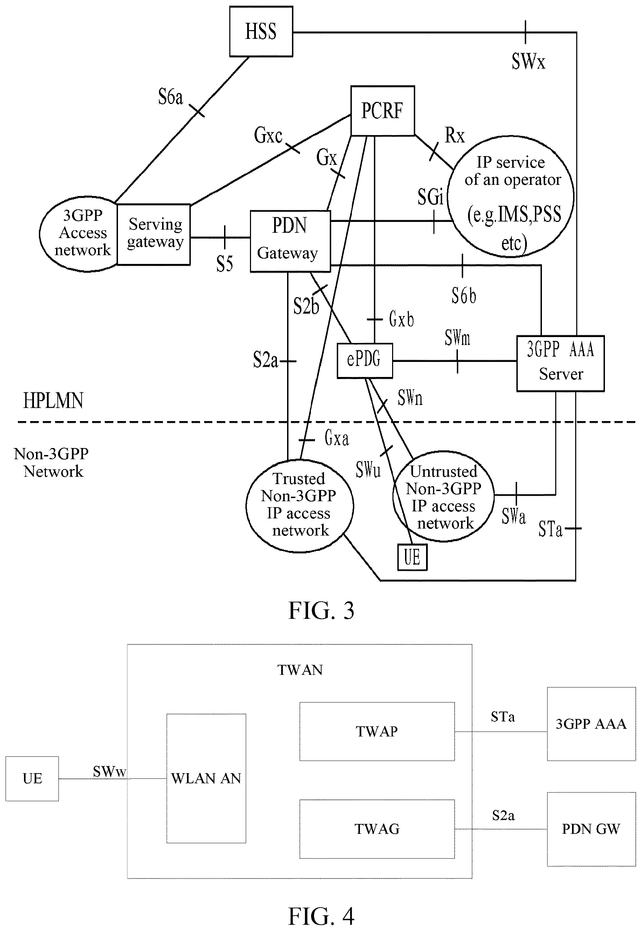

An architecture diagram of deployment in which a UE is connected to an EPC network through a TWAN and the TWAN accesses to the EPC network is shown in Fig. 3. The TWAN supports an S2a GTP/PMIPv6 interface to a PDN GW. A constitution structure of the TWAN, as shown in Fig. 4, includes one or more WLAN Access Points (APs) supporting a 802.11 link defined by 802.11-2007, a Trusted WLAN Access Gateway (TWAG), and a Trusted WLAN AAA server Proxy (TWAP), herein, the TWAG is responsible for forwarding user data between a UE-TWAG point-to-point link and an S2a tunnel, and is a specific function implementation device of an S2a interface on the TWAN, a default router on an access link for the UE, and a Dynamic Host Configuration Protocol (DHCP) server of the UE. The TWAP is used to transfer authentication and authorization charging information between the WLAN access network and a 3GPP Authentication Authorization Accounting (AAA) server.

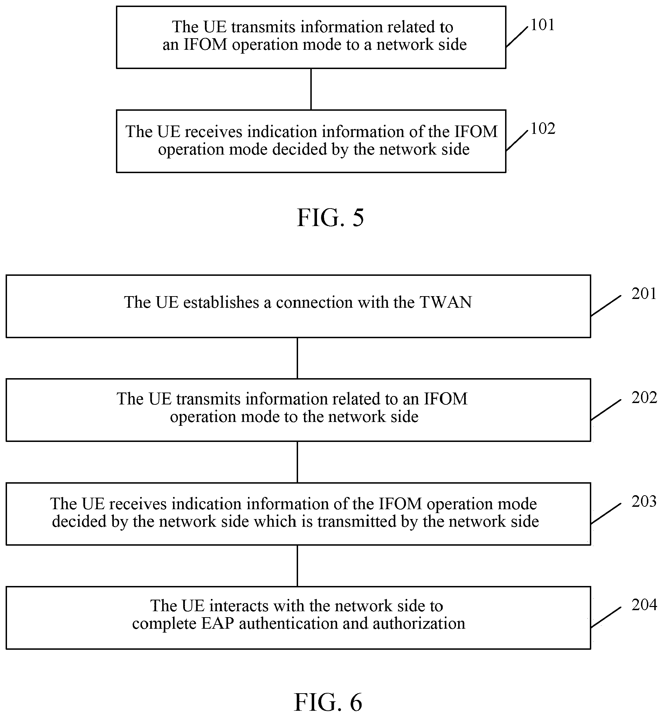

A basic flowchart of a method for implementing flow mobility triggering at a UE side according to an embodiment of the present invention, as shown in Fig. 5, includes the following steps.

In step 101, the UE transmits information related to a flow mobility operation mode to a network side.

Herein, the information is included in a Protocol Configuration Options (PCO) information element or is carried in a message as an independent information element, herein the independent information element is a newly defined IE.

The information related to the flow mobility operation mode includes: a flow mobility operation mode supported by the UE or a request for a flow mobility operation mode; herein, the flow mobility operation mode supported by the UE includes UE-initiated flow mobility supported by the UE, network-initiated flow mobility supported by the UE, and UE-initiated flow mobility and network-initiated flow mobility supported by the UE.

In step 102, the UE receives indication information of the flow mobility operation mode decided by the network side.

Herein, the indication information is used by the UE to modify a service flow routing path, i.e., notifying the UE to use UE-initiated flow mobility, network-initiated flow mobility, or UE-initiated flow mobility and network-initiated flow mobility when a service flow routing path is modified.

### Embodiment one

In an EAP authentication and authorization phase in which a UE establishes a PDN connection through a TWAN for implementation of NB-IFOM, in a scenario that the UE and the network side use a single connection mode, a detailed flowchart of a method for implementing flow mobility triggering at a UE side according to embodiment one of the present invention, as shown in Fig. 6, includes the following steps.

In step 201, the UE establishes a connection with the TWAN.

Specifically, the UE establishes a connection based on IEEE802.11 with the TWAN.

In step 202, the UE transmits information related to a flow mobility operation mode to the network side.

Herein, the information is carried in a PCO information element or as an IE, and is transmitted through an EAP Response/AKA'-Challenge message.

The information related to the flow mobility operation mode includes: a flow mobility operation mode supported by the UE or a request for a flow mobility operation mode; herein, the flow mobility operation mode supported by the UE includes UE-initiated flow mobility supported by the UE, network-initiated flow mobility supported by the UE, and UE-initiated flow mobility and network-initiated flow mobility supported by the UE.

Here, the EAP Response/AKA'-Challenge message is further used to request for a single connection mode, and indicate an NB-IFOM request, a PDN type and a requested APN.

In step 203, the UE receives indication information of the flow mobility operation mode decided by the network side which is transmitted by the network side.

Herein, the indication information is carried in the AKA'-notification message, and is used to notify the UE to use the UE-initiated flow mobility, the network-initiated flow mobility, or the UE-initiated flow mobility and the network-initiated flow mobility.

In step 204, the UE interacts with the network side to complete EAP authentication and authorization.

### Embodiment two

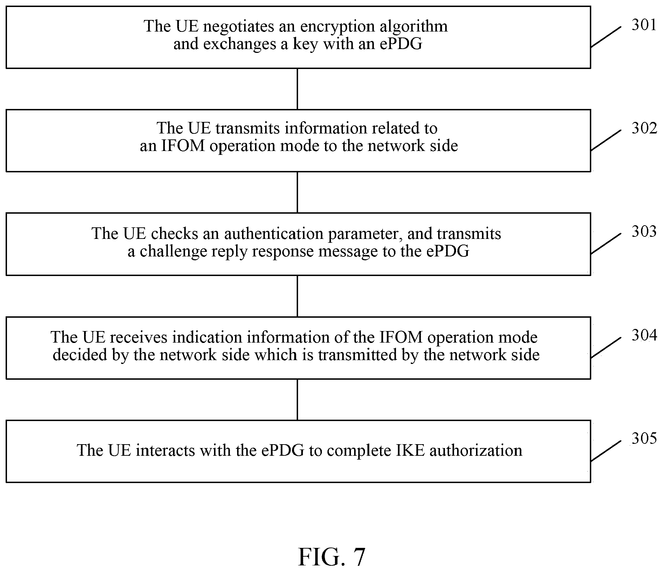

In scenario in which a UE establishes a PDN connection through an untrusted WLAN for implementation of NB-IFOM, a detailed flowchart of a method for implementing flow mobility triggering at a UE side according to embodiment two of the present invention, as shown in Fig. 7, includes the following steps.

In step 301, the UE negotiates an encryption algorithm and exchanges a key with an ePDG.

Specifically, the UE interacts an IKE_SA_INIT message, negotiates the encryption algorithm and exchanges the key etc. with the ePDG.

In step 302, the UE transmits information related to a flow mobility operation mode to the network side.

Specifically, the UE performs IKE_AUTH, and transmits a UE Identity, an APN and the information related to the flow mobility operation mode to the network.

Herein, the information is included in a PCO information element or is carried in a message as an IE. The information related to the flow mobility operation mode includes: a flow mobility operation mode supported by the UE or a request for a flow mobility operation mode; herein, the flow mobility operation mode supported by the UE includes UE-initiated flow mobility supported by the UE, network-initiated flow mobility supported by the UE, and UE-initiated flow mobility and network-initiated flow mobility supported by the UE.

In step 303, the UE checks an authentication parameter, and transmits a challenge reply response message to the ePDG.

In step 304, the UE receives indication information of the flow mobility operation mode decided by the network side which is transmitted by the network side.

Herein, the indication information is carried in an IKE_AUTH response message, and is used to notify the UE to use the UE-initiated flow mobility, the network-initiated flow mobility, or the UE-initiated flow mobility and the network-initiated flow mobility.

In step 305, the UE interacts with the ePDG to complete IKE authorization.

### Embodiment three

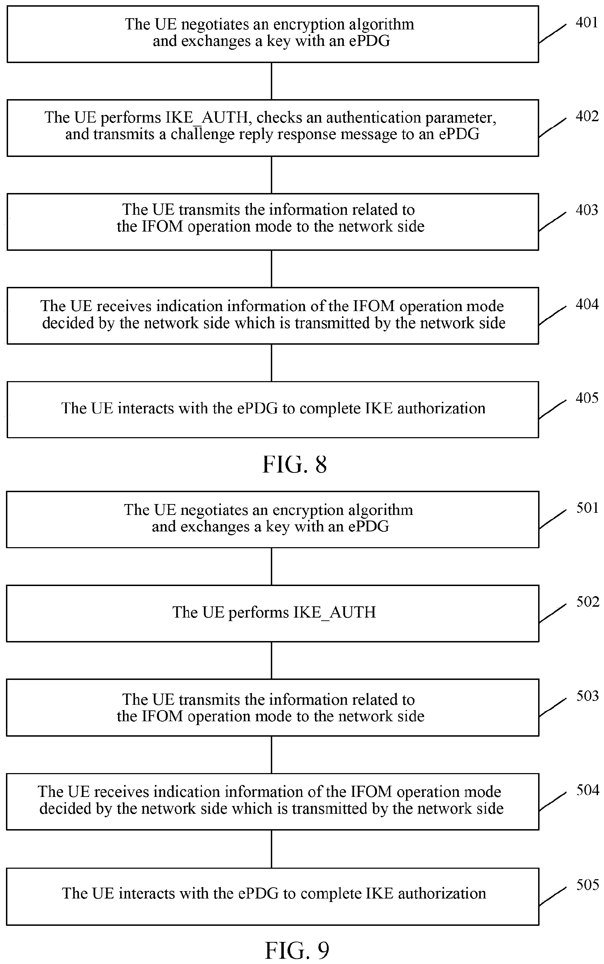

In scenario in which a UE establishes a PDN connection through an untrusted WLAN for implementation of NB-IFOM and a 3GPP AAA server performs a dynamic Internet Protocol (IP) mobility management and selection, a detailed flowchart of a method for implementing flow mobility triggering at a UE side according to embodiment three of the present invention, as shown in Fig. 8, includes the following steps.

In step 401, the UE negotiates an encryption algorithm and exchanges a key with an ePDG.

Specifically, the UE interacts an IKE_SA_INIT message, negotiates the encryption algorithm and exchanges the key etc. with the ePDG.

In step 402, the UE performs IKE_AUTH, checks an authentication parameter, and transmits a challenge reply response message to an ePDG.

Specifically, the UE performing IKE_AUTH includes: transmitting a user identity representation and an APN to the network.

In step 403, the UE transmits the information related to the flow mobility operation mode to the network side.

Herein, the information is included in a PCO information element or is carried in a message as an IE. The information related to the flow mobility operation mode includes: a flow mobility operation mode supported by the UE or a request for a flow mobility operation mode; herein, the flow mobility operation mode supported by the UE includes UE-initiated flow mobility supported by the UE, network-initiated flow mobility supported by the UE, and UE-initiated flow mobility and network-initiated flow mobility supported by the UE.

In step 404, the UE receives indication information of the flow mobility operation mode decided by the network side which is transmitted by the network side.

Herein, the indication information is carried in an IKE_AUTH response message, and is used to notify the UE to use the UE-initiated flow mobility, the network-initiated flow mobility, or the UE-initiated flow mobility and the network-initiated flow mobility.

In step 405, the UE interacts with the ePDG to complete IKE authorization.

### Embodiment four

In scenario in which a UE establishes a PDN connection through an untrusted WLAN for implementation of NB-IFOM, a detailed flowchart of a method for implementing flow mobility triggering at a UE side according to embodiment four of the present invention, as shown in Fig. 9, includes the following steps.

In step 501, the UE negotiates an encryption algorithm and exchanges a key with an ePDG.

Specifically, the UE interacts an IKE_SA_INIT message, negotiates the encryption algorithm and exchanges the key etc. with the ePDG.

In step 502, the UE performs IKE_AUTH.

Specifically, the UE performing IKE_AUTH includes: transmitting a user identity representation and an APN to the network.

In step 503, the UE transmits the information related to the flow mobility operation mode to the network side.

Herein, the information is included in a PCO information element or is carried in a message as an IE. The information related to the flow mobility operation mode includes: a flow mobility operation mode supported by the UE or a request for a flow mobility operation mode; herein, the flow mobility operation mode supported by the UE includes UE-initiated flow mobility supported by the UE, network-initiated flow mobility supported by the UE, and UE-initiated flow mobility and network-initiated flow mobility supported by the UE.

In step 504, the UE receives indication information of the flow mobility operation mode decided by the network side which is transmitted by the network side.

Herein, the indication information is carried in an IKE_AUTH response message, and is used to notify the UE to use the UE-initiated flow mobility, the network-initiated flow mobility, or the UE-initiated flow mobility and the network-initiated flow mobility.

In step 505, the UE interacts with the ePDG to complete IKE authorization.

### Embodiment five

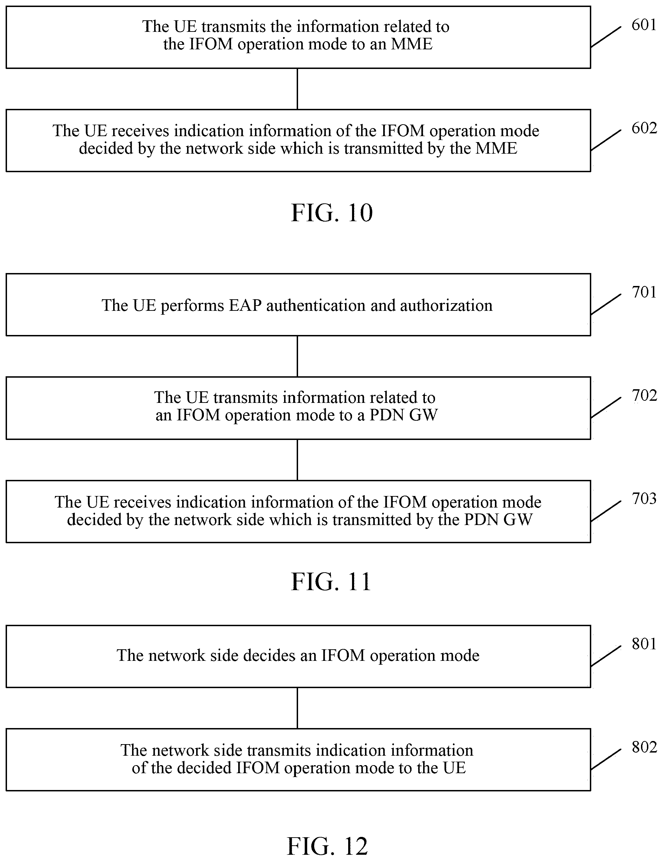

In scenario in which a UE is initially attached to an EPS network through an E-UTRAN, a detailed flowchart of a method for implementing flow mobility triggering at a UE side according to embodiment five of the present invention, as shown in Fig. 10, includes the following steps.

In step 601, the UE transmits the information related to the flow mobility operation mode to an MME.

Herein, the information is included in a PCO information element or is carried in an NAS message as an IE, herein the NAS message includes an attachment request message. The information related to the flow mobility operation mode includes: a flow mobility operation mode supported by the UE or a request for a flow mobility operation mode; herein, the flow mobility operation mode supported by the UE includes UE-initiated flow mobility supported by the UE, network-initiated flow mobility supported by the UE, and UE-initiated flow mobility and network-initiated flow mobility supported by the UE.

In step 602, the UE receives indication information of the flow mobility operation mode decided by the network side which is transmitted by the MME.

Herein, the indication information is included in a PCO information element or is carried in an attachment acceptance message as an independent information element, and is used to notify the UE to use the UE-initiated flow mobility, the network-initiated flow mobility, or the UE-initiated flow mobility and the network-initiated flow mobility.

### Embodiment six

When a UE establishes a PDN connection through a TWAN for implementation of NB-IFOM, in a scenario in which the UE and a network side use a multi-connection mode, a detailed flowchart of a method for implementing flow mobility triggering at a UE side according to embodiment six of the present invention, as shown in Fig. 11, includes the following steps.

In step 701, the UE performs EAP authentication and authorization.

Specifically, the UE performs an EAP authentication and authorization flow through the TWAN and a 3GPP AAA server, to acknowledge use of a multi-connection mode.

In step 702, the UE transmits information related to a flow mobility operation mode to a PDN GW.

Specifically, the UE transmits the information related to the flow mobility operation mode to the TWAN, herein the information is included in a PCO or is carried in a WLCP PDN connection establishment request message as an independent IE; and after receiving the ELCP PDN connection establishment request message, the TWAN transmits the information related to the flow mobility operation mode to the PDN GW through a session establishment request/proxy binding update message.

Herein, the information related to the flow mobility operation mode includes: a flow mobility operation mode supported by the UE or a request for a flow mobility operation mode; herein, the flow mobility operation mode supported by the UE includes UE-initiated flow mobility supported by the UE, network-initiated flow mobility supported by the UE, and UE-initiated flow mobility and network-initiated flow mobility supported by the UE.

In step 703, the UE receives indication information of the flow mobility operation mode decided by the network side which is transmitted by the PDN GW.

Herein, the indication information is carried in a session establishment response message or proxy binding acknowledgement message, and is used to notify the UE to use the UE-initiated flow mobility, the network-initiated flow mobility, or the UE-initiated flow mobility and the network-initiated flow mobility.

A basic flowchart of a method for implementing flow mobility triggering at a network side according to an embodiment of the present invention, as shown in Fig. 12, includes the following steps.

In step 801, the network side decides a flow mobility operation mode.

Here, the network side may decide the flow mobility operation mode according to the information related to the flow mobility operation mode which is transmitted by a UE.

Alternatively, when the UE does not transmit the information related to the flow mobility operation mode, the network side decides the flow mobility operation mode according to configuration of an operator or configuration of a network.

Herein, the information related to the flow mobility operation mode includes: a flow mobility operation mode supported by the UE or a request for a flow mobility operation mode; herein, the flow mobility operation mode supported by the UE includes UE-initiated flow mobility supported by the UE, network-initiated flow mobility supported by the UE, and UE-initiated flow mobility and network-initiated flow mobility supported by the UE.

In step 802, the network side transmits indication information of the decided flow mobility operation mode to the UE.

Herein, the indication information is used by the UE to modify a service flow routing path, i.e., notifying the UE to use UE-initiated flow mobility, network-initiated flow mobility, or UE-initiated flow mobility and network-initiated flow mobility when a service flow routing path is modified.

### Embodiment seven

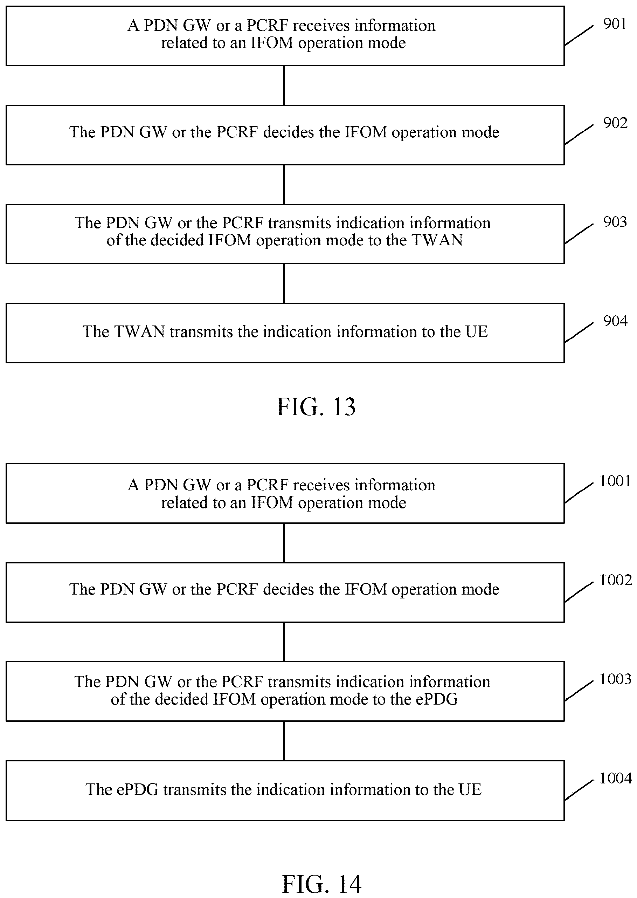

In an EAP authentication and authorization phase in which a UE establishes a PDN connection through a TWAN for implementation of NB-IFOM, in a scenario in which the UE and a network side use a single connection mode, a basic flowchart of a method for implementing flow mobility triggering at a network side according to embodiment seven of the present invention, as shown in Fig. 13, includes the following steps.

In step 901, a PDN GW or a PCRF receives information related to a flow mobility operation mode.

Specifically, the PDN GW or the PCRF receives the information related to the flow mobility operation mode which is transmitted by a TWAN through a session establishment request or a proxy binding update message.

Herein, the information related to the flow mobility operation mode includes: a flow mobility operation mode supported by the UE or a request for a flow mobility operation mode; herein, the flow mobility operation mode supported by the UE includes UE-initiated flow mobility supported by the UE, network-initiated flow mobility supported by the UE, and UE-initiated flow mobility and network-initiated flow mobility supported by the UE.

In step 902, the PDN GW or the PCRF decides the flow mobility operation mode.

Specifically, the PDN GW or the PCRF decides the flow mobility operation mode according to the received information related to the flow mobility operation mode.

In step 903, the PDN GW or the PCRF transmits indication information of the decided flow mobility operation mode to the TWAN.

Specifically, the PDN GW or the PCRF transmits a session establishment response or proxy binding acknowledgement message to the TWAN, herein the message includes the indication information of the flow mobility operation mode decided by the PDN GW or the PCRF.

Herein, the indication information is used by the UE to modify a service flow routing path, i.e., notifying the UE to use UE-initiated flow mobility, network-initiated flow mobility, or UE-initiated flow mobility and network-initiated flow mobility when a service flow routing path is modified.

In step 904, the TWAN transmits the indication information to the UE.

Specifically, the TWAN carries the decided flow mobility operation mode in an EAP message, and transmits the indication information to the UE through the EAP message via a 3GPP AAA server.

### Embodiment eight

In a scenario in which a UE is initially attached to an EPS network through an E-UTRAN, a basic flowchart of a method for implementing flow mobility triggering at a network side according to embodiment eight of the present invention, as shown in Fig. 14, includes the following steps.

In step 1001, a PDN GW or a PCRF receives information related to a flow mobility operation mode.

Specifically, the PDN GW or the PCRF receives the information related to the flow mobility operation mode which is transmitted by an ePDG through a session establishment request or a proxy binding update message.

Herein, the information related to the flow mobility operation mode includes: a flow mobility operation mode supported by the UE or a request for a flow mobility operation mode; herein, the flow mobility operation mode supported by the UE includes UE-initiated flow mobility supported by the UE, network-initiated flow mobility supported by the UE, and UE-initiated flow mobility and network-initiated flow mobility supported by the UE.

In step 1002, the PDN GW or the PCRF decides the flow mobility operation mode.

Specifically, the PDN GW or the PCRF decides the flow mobility operation mode according to the received information related to the flow mobility operation mode.

In step 1003, the PDN GW or the PCRF transmits indication information of the decided flow mobility operation mode to the ePDG.

Specifically, the PDN GW or the PCRF transmits the indication information of the decided flow mobility operation mode to the ePDG through a session establishment response or proxy binding acknowledgement message.

Herein, the indication information is used by the UE to modify a service flow routing path, i.e., notifying the UE to use UE-initiated flow mobility, network-initiated flow mobility, or UE-initiated flow mobility and network-initiated flow mobility when a service flow routing path is modified.

In step 1004, the ePDG transmits the indication information to the UE.

Specifically, the ePDG carries the indication information in an IKE_AUTH response message, and transmits it to the UE.

### Embodiment nine

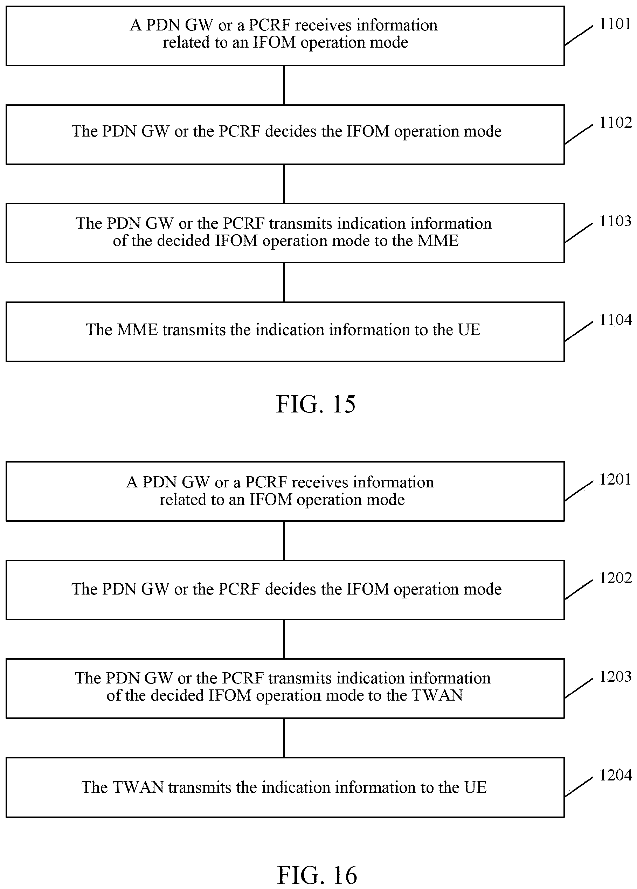

In a scenario in which a UE is initially attached to an EPS network through an E-UTRAN, a basic flowchart of a method for implementing flow mobility triggering at a network side according to embodiment nine of the present invention, as shown in Fig. 15, includes the following steps.

In step 1101, a PDN GW or a PCRF receives information related to a flow mobility operation mode.

Specifically, the information related to the flow mobility operation mode is transmitted by an MME through a session establishment request or a proxy binding update message via an SGW.

Herein, the information related to the flow mobility operation mode includes: a flow mobility operation mode supported by the UE or a request for a flow mobility operation mode; herein, the flow mobility operation mode supported by the UE includes UE-initiated flow mobility supported by the UE, network-initiated flow mobility supported by the UE, and UE-initiated flow mobility and network-initiated flow mobility supported by the UE.

In step 1102, the PDN GW or the PCRF decides the flow mobility operation mode.

Specifically, the PDN GW or the PCRF decides the flow mobility operation mode according to the received information related to the flow mobility operation mode.

In step 1103, the PDN GW or the PCRF transmits indication information of the decided flow mobility operation mode to the MME.

Specifically, the PDN GW or the PCRF transmits the indication information to the MME through a session establishment response message via the SGW.

Herein, the indication information is used by the UE to modify a service flow routing path, i.e., notifying the UE to use UE-initiated flow mobility, network-initiated flow mobility, or UE-initiated flow mobility and network-initiated flow mobility when a service flow routing path is modified.

In step 1104, the MME transmits the indication information to the UE.

Specifically, the MME transmits the indication information to the UE through an attachment acceptance message.

### Embodiment ten

In a scenario in which a UE establishes a PDN connection through a TWAN for implementation of NB-IFOM and the UE and a network side use a multi-connection mode, a basic flowchart of a method for implementing flow mobility triggering at a network side according to embodiment ten of the present invention, as shown in Fig. 16, includes the following steps.

In step 1201, a PDN GW or a PCRF receives information related to a flow mobility operation mode.

Specifically, the PDN GW or the PCRF receives information related to a flow mobility operation mode which is transmitted by a TWAN through a session establishment request or a proxy binding update message.

Herein, the information related to the flow mobility operation mode includes: a flow mobility operation mode supported by the UE or a request for a flow mobility operation mode; herein, the flow mobility operation mode supported by the UE includes UE-initiated flow mobility supported by the UE, network-initiated flow mobility supported by the UE, and UE-initiated flow mobility and network-initiated flow mobility supported by the UE.

In step 1202, the PDN GW or the PCRF decides the flow mobility operation mode.

Specifically, the PDN GW or the PCRF decides the flow mobility operation mode according to the received information related to the flow mobility operation mode.

In step 1203, the PDN GW or the PCRF transmits indication information of the decided flow mobility operation mode to the TWAN.

Specifically, the PDN GW or the PCRF transmits a session establishment response or proxy binding acknowledgement message to the TWAN, herein the message includes the indication information of the flow mobility operation mode decided by the PDN GW or the PCRF.

Herein, the indication information is used by the UE to modify a service flow routing path, i.e., notifying the UE to use UE-initiated flow mobility, network-initiated flow mobility, or UE-initiated flow mobility and network-initiated flow mobility when a service flow routing path is modified.

In step 1204, the TWAN transmits the indication information to the UE.

Specifically, the TWAN carries the indication information in a WLCP and transmits it to the UE.

### Embodiment eleven

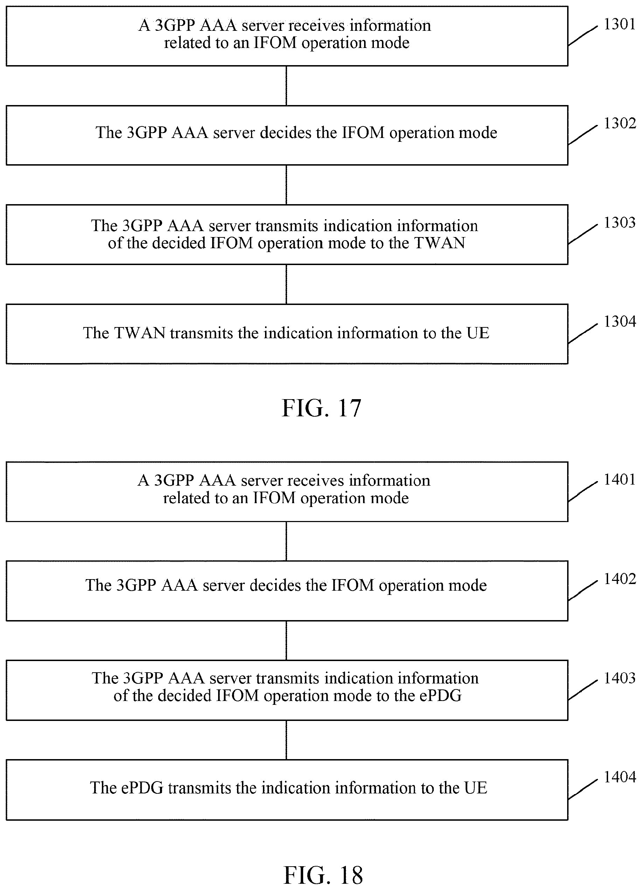

In an EAP authentication and authorization phase in which a UE establishes a PDN connection through a TWAN for implementation of NB-IFOM, the UE and a network side use a single connection mode, and a basic flowchart of a method for implementing flow mobility triggering at a network side according to embodiment eleven of the present invention, as shown in Fig. 17, includes the following steps.

In step 1301, a 3GPP AAA server receives information related to a flow mobility operation mode.

Specifically, the 3GPP AAA server receives information related to a flow mobility operation mode which is transmitted by a TWAN through a session establishment request or a proxy binding update message.

Herein, the information related to the flow mobility operation mode includes: a flow mobility operation mode supported by the UE or a request for a flow mobility operation mode; herein, the flow mobility operation mode supported by the UE includes UE-initiated flow mobility supported by the UE, network-initiated flow mobility supported by the UE, and UE-initiated flow mobility and network-initiated flow mobility supported by the UE.

In step 1302, the 3GPP AAA server decides the flow mobility operation mode.

Specifically, the 3GPP AAA server decides an indication of the flow mobility operation mode according to the received information related to the flow mobility operation mode.

In step 1303, the 3GPP AAA server transmits indication information of the decided flow mobility operation mode to the TWAN.

Specifically, the 3GPP AAA server carries the indication information in an EAP AKA'-notification message and transmits it to the TWAN.

Herein, the indication information is used by the UE to modify a service flow routing path, i.e., notifying the UE to use UE-initiated flow mobility, network-initiated flow mobility, or UE-initiated flow mobility and network-initiated flow mobility when a service flow routing path is modified.

In step 1304, the TWAN transmits the indication information to the UE.

### Embodiment twelve

In a scenario in which a UE establishes a PDN connection through an untrusted WLAN for implementation of NB-IFOM, and a basic flowchart of a method for implementing flow mobility triggering at a network side according to embodiment twelve of the present invention, as shown in Fig. 18, includes the following steps.

In step 1401, a 3GPP AAA server receives information related to a flow mobility operation mode.

Specifically, the 3GPP AAA server receives information related to a flow mobility operation mode which is transmitted by an ePDG through a session establishment request or a proxy binding update message.

Herein, the information related to the flow mobility operation mode includes: a flow mobility operation mode supported by the UE or a request for a flow mobility operation mode; herein, the flow mobility operation mode supported by the UE includes UE-initiated flow mobility supported by the UE, network-initiated flow mobility supported by the UE, and UE-initiated flow mobility and network-initiated flow mobility supported by the UE.

In step 1402, the 3GPP AAA server decides the flow mobility operation mode.

Specifically, the 3GPP AAA server decides an indication of the flow mobility operation mode according to the received information related to the flow mobility operation mode.

In step 1403, the 3GPP AAA server transmits indication information of the decided flow mobility operation mode to the ePDG.

Specifically, the 3GPP AAA server carries the indication information in an EAP AKA' message and transmits it to the ePDG.

Herein, the indication information is used by the UE to modify a service flow routing path, i.e., notifying the UE to use UE-initiated flow mobility, network-initiated flow mobility, or UE-initiated flow mobility and network-initiated flow mobility when a service flow routing path is modified.

In step 1404, the ePDG transmits the indication information to the UE.

### Embodiment thirteen

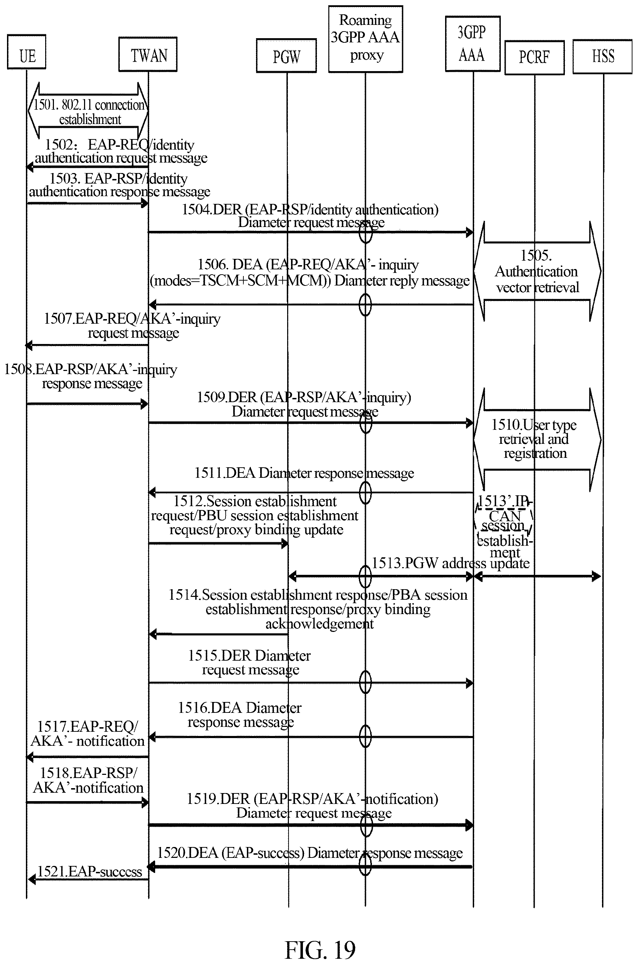

In an EAP authentication and authorization phase in which a UE establishes a PDN connection through a TWAN for implementation of NB-IFOM, in a scenario in which the UE and a network side use a single connection mode, and a detailed flowchart of a method for implementing flow mobility triggering at a UE side and a network side according to embodiment thirteen of the present invention, as shown in Fig. 19, includes the following steps.

In step 1501, the UE establishes a connection with the TWAN.

Specifically, the UE establishes a connection based on IEEE802.11 with the TWAN.

In steps 1502-1503, the TWAN implements authentication with the UE.

Specifically, the TWAN interacts an EAP authentication message with the UE, for processing such as identity authentication, access configuration information interaction etc.

In steps 1504-1507, the TWAN implements authentication and authorization with a 3GPP AAA server.

Specifically, the TWAN transmits EAP authentication information of the UE to the 3GPP AAA server through a Diameter authentication and authorization request message, after acquiring an authentication vector from an HSS, the 3GPP AAA server transmits a Diameter authentication and authorization request reply message to the TWAN, and the TWAN transmits an EAP Request/AKA'-Challenge message to the UE for indicating that the network supports a single connection mode and a multi-connection mode.

In steps 1508-1513, a PDN GW receives information related to a flow mobility operation mode and decides the flow mobility operation mode, or a PCRF receives the information related to the flow mobility operation mode and decides the flow mobility operation mode.

Specifically, the UE transmits an EAP Response/AKA'-Challenge message to the 3GPP AAA server to request a single connection mode, is connected to an EPC network, and indicates an NB-IFOM request, a requested APN, a PDN type, and the information related to the flow mobility operation mode.

Herein, the information related to the flow mobility operation mode includes: a flow mobility operation mode supported by the UE or a request for a flow mobility operation mode; herein, the flow mobility operation mode supported by the UE includes UE-initiated flow mobility supported by the UE, network-initiated flow mobility supported by the UE, and UE-initiated flow mobility and network-initiated flow mobility supported by the UE. The information is included in a PCO information element or is carried in a message as an IE.

The 3GPP AAA server transmits the information to the TWAN through a Diameter message, and transmits it to the PDN GW through a session establishment request or a proxy binding update message via the TWAN; and the PDN GW decides the flow mobility operation mode, and updates an address to the 3GPP AAA; or the PDN GW transmits it to the PCRF in a process of establishing an IP-CAN session, and the PCRF acknowledge the flow mobility operation mode.

In steps 1514-1517, the PDN GW transmits indication information of the decided flow mobility operation mode to the UE.

Specifically, the PDN GW transmits a session establishment response or proxy binding acknowledgment message to the TWAN, herein the message includes the indication information of the flow mobility operation mode decided by the PDN GW, and the TWAN then transmits the indication information to the 3GPP AAA sever through a Diameter request message. Finally, the 3GPP AAA server transmits the indication information to the UE through an AKA'-notification message.

Herein, the indication information is used by the UE to modify a service flow routing path, i.e., notifying the UE to use UE-initiated flow mobility, network-initiated flow mobility, or UE-initiated flow mobility and network-initiated flow mobility when a service flow routing path is modified.

In steps 1518-1521, the UE completes authentication and authorization.

### Embodiment fourteen

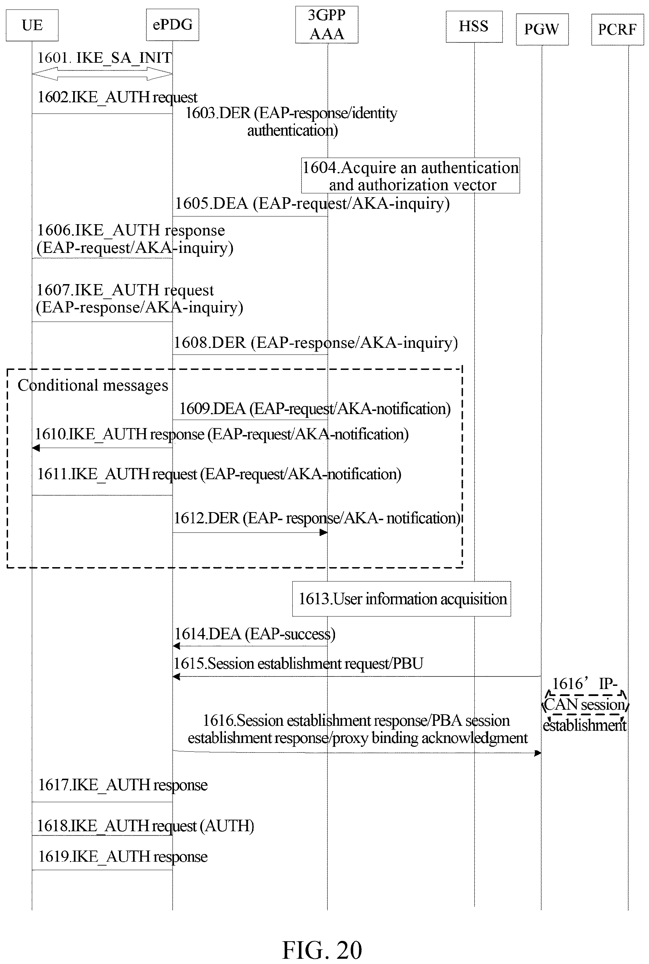

In an EAP authentication and authorization phase in which a UE establishes a PDN connection through a TWAN for implementation of NB-IFOM, in a scenario in which the UE and a network side use a single connection mode, a detailed flowchart of a method for implementing flow mobility triggering at a UE side and a network side according to embodiment fourteen of the present invention, as shown in Fig. 20, includes the following steps.

In step 1601, the UE negotiates an encryption algorithm and exchanges a key with an ePDG.

Specifically, the UE interacts an IKE_SA_INIT message, negotiates the encryption algorithm and exchanges the key etc. with the ePDG.

In steps 1602-1606, the UE implements IKE_AUTH.

Specifically, the UE transmits a UE Identity, and an APN to a 3GPP AAA server via the ePDG.

The 3GPP AAA server authenticates the UE identity, and transmits authentication information such as an authentication challenge message, identity information of the ePDG, a certificate etc. transmitted by the 3GPP AAA server to the UE through an IKEv2 message via the ePDG.

In steps 1607-1608, the UE transmits a challenge reply message to the 3GPP AAA server.

Specifically, the UE checks an authentication parameter, replies the challenge message in the IKEv2 message, and transmits the challenge reply message to the 3GPP AAA server through the ePDG.

In steps 1609-1614, the 3GPP AAA server interacts AKA-notification with the UE.

Specifically, when the 3GPP AAA server performs dynamic IP mobility management and selection, the 3GPP AAA server initiates AKA-notification interaction to the UE.

The UE transmits a KE_AUTH request message to the 3GPP AAA server through the ePDG, and the 3GPP AAA acquires UE subscription information from an HSS and transmits an EAP success message to the UE.

In steps 1615-1617, the PDN GW receives the information related to the flow mobility operation mode, decides indication information of the flow mobility operation mode, and transmits the indication information to the UE; or the PCRF receives the information related to the flow mobility operation mode, and decides the flow mobility operation mode.

Specifically, the PDN GW receives the information related to the flow mobility operation mode transmitted by the ePDG through a session establishment request or proxy binding update message, and decides indication information of the flow mobility operation mode according to the received information related to the flow mobility operation mode.

Herein, the indication information is used by the UE to modify a service flow routing path, i.e., notifying the UE to use UE-initiated flow mobility and network-initiated flow mobility when a service flow routing path is modified.

The PDN GW transmits the indication information of the decided flow mobility operation mode to the ePDG through a session establishment response or proxy binding acknowledgment message, and the ePDG then carries the indication information in an IKE_AUTH response message and transmits it to the UE; or the PDN GW transmits it to a PCRF in a process of establishing an IP-CAN session, and the PCRF acknowledges the flow mobility operation mode, and transmits it to the PDN GW, and the PDN GW transmits the indication information of the decided flow mobility operation mode to the ePDG through a session establishment response or proxy binding acknowledgement message, and the ePDG then carries the indication information in an IKE_AUTH response message and transmits it to the UE.

In steps 1618-1619, the UE completes IKE authorization.

In the present embodiment, the information related to the flow mobility operation mode may be transmitted to the network side in step 1602, or step 1607 or step 1611.

Herein, the information related to the flow mobility operation mode includes: a flow mobility operation mode supported by the UE or a request for a flow mobility operation mode; herein, the flow mobility operation mode supported by the UE includes UE-initiated flow mobility supported by the UE, network-initiated flow mobility supported by the UE, and UE-initiated flow mobility and network-initiated flow mobility supported by the UE.

### Embodiment fifteen

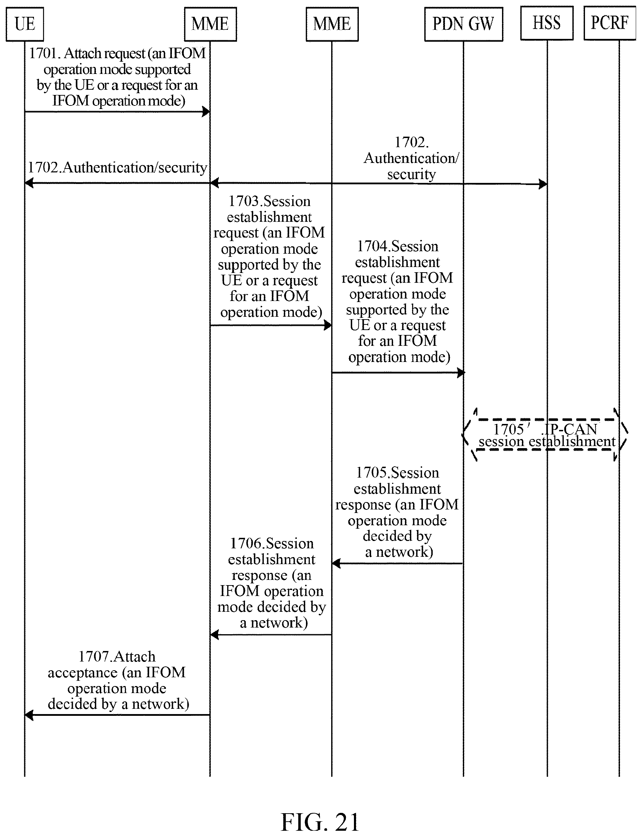

In a scenario in which a UE is initially attached to an EPS network through an E-UTRAN, a detailed flowchart of a method for implementing flow mobility triggering at a UE side and a network side according to embodiment fifteen of the present invention, as shown in Fig. 21, includes the following steps.

In step 1701, the UE transmits information related to a flow mobility operation mode to an MME.

Herein, the information is included in a PCO information element or is carried in an NAS message as an IE. The NAS message includes an attachment request message.

The information related to the flow mobility operation mode includes: a flow mobility operation mode supported by the UE or a request for a flow mobility operation mode; herein, the flow mobility operation mode supported by the UE includes UE-initiated flow mobility supported by the UE, network-initiated flow mobility supported by the UE, and UE-initiated flow mobility and network-initiated flow mobility supported by the UE.

In step 1702, the UE implements authentication and certification.

Specifically, when there is no integrity protection for the attachment request message or the integrity protection fails, the UE implements authentication and certification.

In steps 1703-1704, the MME transmits the information related to the flow mobility operation mode to a PDN GW.

Specifically, the MME transmits the information related to the flow mobility operation mode to the PDN GW via an SGW.

In step 1705, the PDN GW decides the flow mobility operation mode or a PCRF decides the flow mobility operation mode.

Specifically, the PDN GW decides the flow mobility operation mode according to the received information related to the flow mobility operation mode or the PCRF decides the flow mobility operation mode according to the information related to the flow mobility operation mode received in a flow of establishing an IP-CAN session and notifies it to the PDN GW.

Herein, the indication information is used to notify the UE to use UE-initiated flow mobility, network-initiated flow mobility, or UE-initiated flow mobility and network-initiated flow mobility.

In steps 1706-1707, the PDN GW transmits the indication information to the UE.

Specifically, the PDN GW transmits the indication information to the MME via the SGW through a session establishment response message, and the MME transmits the indication information to the UE via an attachment acceptance message; herein the indication information is used by the UE to modify a service flow routing path, i.e., notifying the UE to use UE-initiated flow mobility, network-initiated flow mobility, or UE-initiated flow mobility and network-initiated flow mobility when a service flow routing path is modified.

### Embodiment sixteen

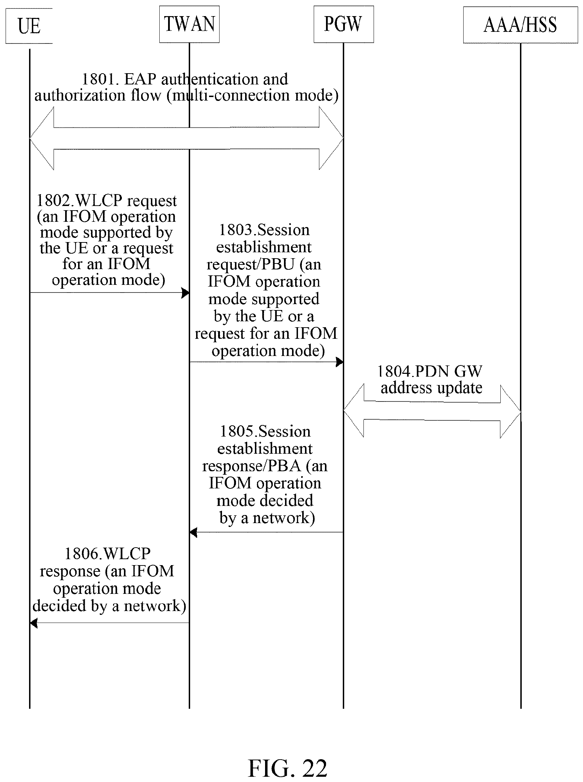

In a scenario in which a UE establishes a PDN connection through a TWAN for implementation of NB-IFOM and the UE and a network side use a multi-connection mode, a detailed flowchart of a method for implementing flow mobility triggering at a UE side and a network side according to embodiment sixteen of the present invention, as shown in Fig. 22, includes the following steps.

In step 1801, the UE implements EAP authentication and authorization.

Specifically, the UE implements an EAP authentication and authorization flow through the TWAN and a 3GPP AAA server, to acknowledge use of a multi-connection mode.

In steps 1802-1803, the UE transmits information related to a flow mobility operation mode to a PDN GW.

Specifically, the UE transmits the information related to the flow mobility operation mode to the TWAN, herein the information is included in a PCO or is carried in a WLCP PDN connection establishment request message as an IE, and after receiving the ELCP PDN connection establishment request message, the TWAN transmits the information related to the flow mobility operation mode to the PDN GW through a session establishment request/proxy binding update message.

Herein, the information related to the flow mobility operation mode includes: a flow mobility operation mode supported by the UE or a request for a flow mobility operation mode; herein, the flow mobility operation mode supported by the UE includes UE-initiated flow mobility supported by the UE, network-initiated flow mobility supported by the UE, and UE-initiated flow mobility and network-initiated flow mobility supported by the UE.

In step 1804, the PDN GW decides the flow mobility operation mode.

Specifically, the PDN GW decides indication information of the flow mobility operation mode according to the received information related to the flow mobility operation mode.

Herein, the indication information is used to notify the UE to use UE-initiated flow mobility, network-initiated flow mobility, or UE-initiated flow mobility and network-initiated flow mobility.

In steps 1805-1806, the PDN GW transmits the indication information to the UE.

Specifically, the PDN GW transmits the indication information of the decided flow mobility operation mode to an ePDG through a session establishment response or proxy binding acknowledgement message, and the ePDG then carries the indication information in an IKE_AUTH response message and transmits it to the UE.

Herein, the indication information is used by the UE to modify a service flow routing path, i.e., notifying the UE to use UE-initiated flow mobility, network-initiated flow mobility, or UE-initiated flow mobility and network-initiated flow mobility when a service flow routing path is modified.

### Embodiment seventeen

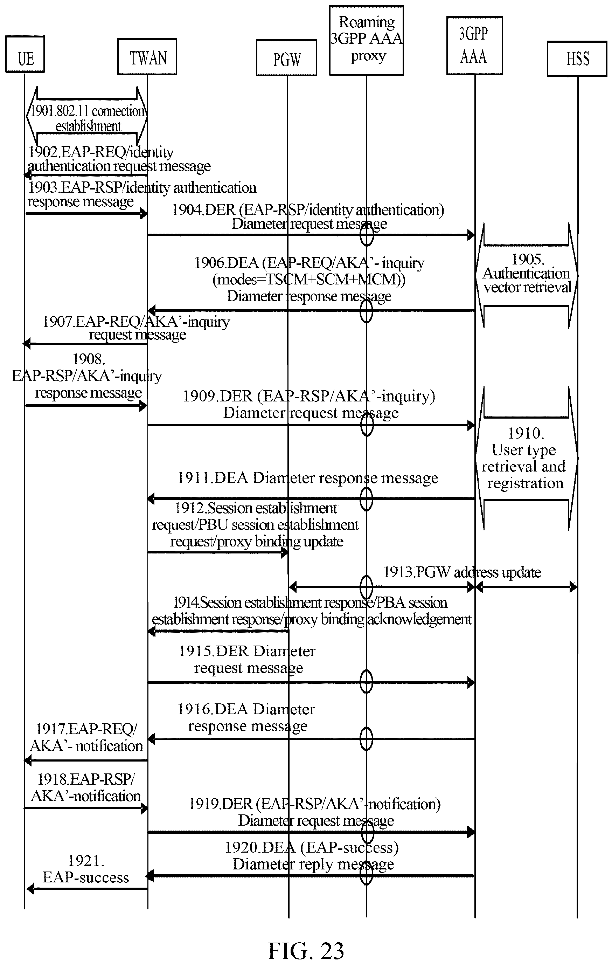

In an EAP authentication and authorization phase in which a UE establishes a PDN connection through a TWAN for implementation of NB-IFOM, in a scenario in which the UE and a network side use a single-connection mode, a detailed flowchart of a method for implementing flow mobility triggering at a UE side and a network side according to embodiment thirteen of the present invention, as shown in Fig. 23, includes the following steps.

In step 1901, the UE establishes a connection with the TWAN.

Specifically, the UE establishes a connection based on IEEE802.11 with the TWAN.

In steps 1902-1903, the TWAN implements authentication with the UE.

Specifically, the TWAN interacts an EAP authentication message with the UE, for processing such as identity authentication, access configuration information interaction etc.

In steps 1904-1907, the TWAN implements authentication and authorization with a 3GPP AAA server.

Specifically, the TWAN transmits EAP authentication information of the UE to the 3GPP AAA server through a Diameter authentication and authorization request message, after acquiring an authentication vector from an HSS, the 3GPP AAA server transmits a Diameter authentication and authorization request reply message to the TWAN, and the TWAN transmits an EAP Request/AKA'-Challenge message to the UE for indicating that the network supports a single connection mode and a multi-connection mode.

In steps 1908-1912, the 3GPP AAA server receives the information related to the flow mobility operation mode and decides the flow mobility operation mode.

Herein, the information related to the flow mobility operation mode includes: a flow mobility operation mode supported by the UE or a request for a flow mobility operation mode; herein, the flow mobility operation mode supported by the UE includes UE-initiated flow mobility supported by the UE, network-initiated flow mobility supported by the UE, and UE-initiated flow mobility and network-initiated flow mobility supported by the UE. The information is included in a PCO information element or is carried in a message as an IE.

In steps 1913-1917, the 3GPP AAA server transmits indication information of the decided flow mobility operation mode to the UE.

Specifically, the 3GPP AAA server carries the decided flow mobility operation mode in an AKA'-notification message and transmits it to the UE through the TWAN.

In steps 1918-1921, the UE completes authentication and authorization.

### Embodiment eighteen

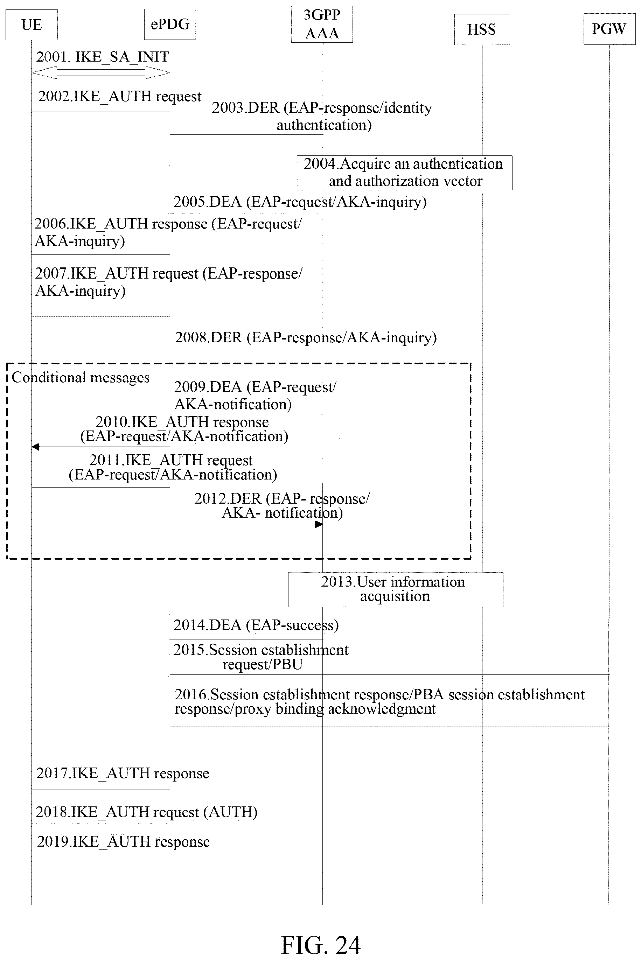

In an EAP authentication and authorization phase in which a UE establishes a PDN connection through a TWAN for implementation of NB-IFOM, in a scenario in which the UE and a network side use a single connection mode, a detailed flowchart of a method for implementing flow mobility triggering at a UE side and a network side according to embodiment eighteen of the present invention, as shown in Fig. 24, includes the following steps.

In step 2001, the UE negotiates an encryption algorithm and exchanges a key with an ePDG.

Specifically, the UE interacts an IKE_SA_INIT message, negotiates the encryption algorithm and exchanges the key etc. with the ePDG.

In steps 2002-2006, the UE implements IKE_AUTH.

Specifically, the UE transmits a UE Identity, and an APN to a 3GPP AAA server via the ePDG.

The 3GPP AAA server authenticates the UE identity, and transmits authentication information such as an authentication challenge message, identity information of the ePDG, a certificate etc. transmitted by the 3GPP AAA server to the UE through an IKEv2 message via the ePDG.

In steps 2007-2008, the UE transmits a challenge reply message to the 3GPP AAA server.

Specifically, the UE checks an authentication parameter, replies the challenge message in the IKEv2 message, and transmits the challenge reply message to the 3GPP AAA server through the ePDG.

In steps 2009-2014, the 3GPP AAA server interacts AKA-notification with the UE.

Specifically, when the 3GPP AAA server performs dynamic IP mobility management and selection, the 3GPP AAA server initiates AKA-notification interaction to the UE.

The UE transmits a KE_AUTH request message to the 3GPP AAA server through the ePDG, and the 3GPP AAA acquires UE subscription information from an HSS and transmits an EAP success message to the UE.

In steps 2015-2017, the 3GPP AAA server receives the information related to the flow mobility operation mode, decides indication information of the flow mobility operation mode, and transmits the indication information to the UE.

Specifically, the 3GPP AAA server decides the indication information of the flow mobility operation mode according to the received information related to the flow mobility operation mode, and the 3GPP AAA server carries the decided flow mobility operation mode in an EAP AKA message, and transmits it to the UE through an ePDG.

Herein, the indication information is used by the UE to modify a service flow routing path, i.e., notifying the UE to use UE-initiated flow mobility and network-initiated flow mobility when a service flow routing path is modified.

In steps 2018-2019, the UE completes IKE authorization.

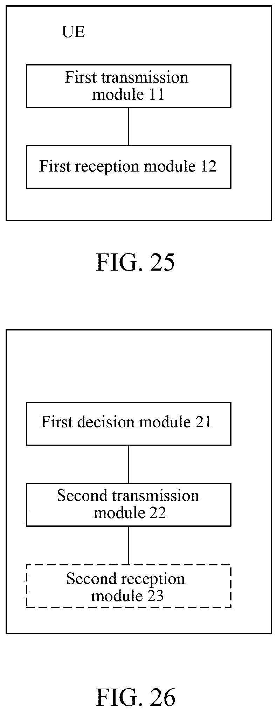

In order to achieve the above method for negotiating a flow mobility operation mode, the embodiments of the present invention further provide a UE. A constitution structure of the UE, as shown in Fig. 25, includes a first transmission module 11 and a first reception module 12, herein,
the first transmission module 11 is arranged to transmit information related to a flow mobility operation mode to a network side, herein the information related to the flow mobility operation mode is used by a network side to decide the flow mobility operation mode, and
the first reception module 12 is arranged to receive indication information of the flow mobility operation mode decided by the network side.

Further, the information related to the flow mobility operation mode includes: a flow mobility operation mode supported by the UE or a request for a flow mobility operation mode; herein, the flow mobility operation mode supported by the UE includes UE-initiated flow mobility supported by the UE, network-initiated flow mobility supported by the UE, and UE-initiated flow mobility and network-initiated flow mobility supported by the UE.

Further, in an EAP authentication and authorization phase in which the UE establishes a PDN connection through a TWAN for implementation of NB-IFOM, the UE and the network side use a single connection mode, the first transmission module 11 is further arranged to transmit the information related to the flow mobility operation mode to the network side, herein the information is carried in an EAP message; and/or
the first reception module 12 is further arranged to receive the indication information of the flow mobility operation mode decided by the network side which is transmitted by the network side, herein the indication information is carried in an AKA' notification message.

Further, when the UE establishes a PDN connection through an untrusted WLAN for implementation of NB-IFOM, the first transmission module 11 is further arranged to transmit the information related to the flow mobility operation mode to the network side, herein the information is carried in an IKE_AUTH request message or is carried in an IKEv2 message; and/or
the first reception module 12 is further arranged to receive the indication information of the flow mobility operation mode decided by the network side which is transmitted by the network side, herein the indication information is transmitted by a PGW to the UE via an ePDG which carries the indication information in an IKE_AUTH response message.

Further, when the network side performs dynamic IP mobility management and selection, the IKE AUTH request message is transmitted by the UE to the ePDG.

Further, when the UE is initially attached to an EPS network via an E-UTRAN, the first transmission module 11 is further arranged to transmit the information related to the flow mobility operation mode to a Mobility Management Element (MME), herein the information is carried in an NAS message; and/or
the first reception module 12 is further arranged to receive the indication information of the flow mobility operation mode decided by the network side which is transmitted by the MME, herein the indication information is carried in an attachment acceptance message.

Further, when the UE establishes a PDN connection through a TWAN for implementation of NB-IFOM, the UE and the network side use a multi-connection mode, the first transmission module 11 is further arranged to transmit the information related to the flow mobility operation mode to a PDN GW, herein the information is carried in a WLCP PDN connection establishment request message; and/or
the first reception module 12 is further arranged to receive the indication information of the flow mobility operation mode decided by the network side which is transmitted by the PDN GW or a PCRF, herein the indication information is carried in a session establishment response message or proxy binding acknowledgement message.

The embodiments of the present invention further disclose a device for implementing flow mobility triggering. A constitution structure of the device, as shown in Fig. 26, includes: a first decision module 21 and a second transmission module 22, herein
the first decision module 21 is arranged to decide indication information of a flow mobility operation mode; and
the second transmission module 22 is arranged to transmit indication information of the decided flow mobility operation mode to a UE, herein the indication information is used by the UE to modify a service flow routing path.

Specifically, the indication information is used to notify the UE to use UE-initiated flow mobility, network-initiated flow mobility, or UE-initiated flow mobility and network-initiated flow mobility when a service flow routing path is modified.

Further, the device further includes: a second reception module 23 arranged to receive information related to the flow mobility operation mode.

Further, in an EAP authentication and authorization phase in which the UE establishes a PDN connection through a TWAN for implementation of NB-IFOM, the UE and the network side use a single connection mode, and when the device is a PDN GW, the second transmission module 22 is further arranged to carry the decided flow mobility operation mode in an EAP message and transmit it to the UE through a TWAN and a 3GPP AAA server.

In the above solution, in an EAP authentication and authorization phase in which the UE establishes a PDN connection through a TWAN for implementation of NB-IFOM, the UE and the network side use a single connection mode, and when the device is a PCRF, the second transmission module 22 is further used to carry the decided flow mobility operation mode in an EAP message and transmit it to the UE through a PDN GW, a TWAN and a 3GPP AAA server.

Further, the UE establishes a PDN connection through an untrusted WLAN for implementation of NB-IFOM, and when the device is a PDN GW, the second transmission module 22 is further arranged to carry the decided flow mobility operation mode in an IKEv2 message and transmit it to the UE through an ePDG.

In the embodiments of the present invention, the UE establishes a PDN connection through an untrusted WLAN for implementation of NB-IFOM, and when the device is a PCRF, the second transmission module is further used to carry the decided flow mobility operation mode in an IKEv2 message and transmit it to the UE through a PDN GW and an ePDG.

Further, the UE is initially attached to an EPS network via an E-UTRAN, and when the device is a PDN GW, the second transmission module 22 is further arranged to carry the decided flow mobility operation mode in a PCO information element or as an independent information element, and transmit it to the UE through a session establishment response message via a S-GW and an MME.

In the embodiments of the present invention, the UE is initially attached to an EPS network via an E-UTRAN, and when the device is a PCRF, the second transmission module is further arranged to carry the decided flow mobility operation mode in a PCO information element or as an independent information element, and transmit it to the UE via a PDN GW, an S-GW and an MME.

Further, when the UE establishes a PDN connection through a TWAN for implementation of NB-IFOM, the UE and the network side use a multi-connection mode, and when the device is a PDN GW, the second transmission module 22 is further arranged to carry the decided flow mobility operation mode in a PCO information element or as an independent information element, and transmit it to the UE through an EAP or WLCP message via a TWAN.

In the embodiments of the present invention, the UE establishes a PDN connection through a TWAN for implementation of NB-IFOM, the UE and the network side use a multi-connection mode, and when the device is a PCRF, the second transmission module is further used to carry the decided flow mobility operation mode in a PCO information element or as an independent information element, and transmit it to the UE through an EAP or WLCP message via a TWAN.

Further, in an EAP authentication and authorization phase in which the UE establishes a PDN connection through a TWAN for implementation of NB-IFOM, the UE and the network side use a single connection mode, and when the device is a 3GGP AAA server, the second transmission module 22 is further arranged to carry the decided flow mobility operation mode in an EAP message and transmit it to the UE through a TWAN.

Further, the UE establishes a PDN connection through an untrusted WLAN for implementation of NB-IFOM, and when the device is a 3GGP AAA server, the second transmission module 22 is further arranged to carry the decided flow mobility operation mode in an EAP AKA message and transmit it to the UE through an ePDG.

In the embodiments of the present invention, the device for implementing flow mobility triggering may be implemented by a packet data network gateway, or may also be implemented by a 3GPP AAA server.

The first transmission module 11 and the first reception module 12 in the UE proposed in the embodiments of the present invention can be implemented by a processor, and of course can also be implemented by a specific logic circuit, herein the processor may be a processor on the UE, and in practical applications, the processor may be a Central Processing Unit (CPU), a Micro-Processing Unit (MPU), a Digital Signal Processor (DSP), or a Field Programmable Gate Array (FPGA) etc.

The first decision module 21, the second transmission module 22 and the second reception module 23 in the device for implementing flow mobility triggering proposed in the embodiments of the present invention can be implemented by a processor, and of course can also be implemented by a specific logic circuit; herein the processor may be a processor on packet data network gateway or a processor on a 3GPP AAA server, and in practical applications, the processor may be a CPU, an MPU, a DSP or an FPGA etc.

In the embodiments of the present invention, if the above method for implementing flow mobility triggering in a form of software functional modules and is sold or used as an independent product, it may also be stored in a computer readable storage medium. Based on this understanding, the technical solutions according to the embodiments of the present invention can be embodied, in essence or as a contribution to the prior art, in the form of a software product, the computer software product is stored in a storage medium including a universal disk, a mobile hard disk, a Read Only Memory (ROM), a magnetic disk, or an optical disc etc., which includes a number of instructions for causing a computer device (which may be a personal computer, a server, or a network device, etc.) to perform a part or all of the methods described in the various embodiments of the present invention. In this way, the embodiments of the present invention are not limited to any particular combination of hardware and software.

Correspondingly, the embodiments of the present invention further provide a computer storage medium having stored thereon a computer program for performing the above-described method for implementing flow mobility triggering according to the embodiments of the present invention.

The above description is only preferred embodiments of the present invention and is not intended to limit the protection scope of the present invention.

## Claims

1. A method for implementing IP flow mobility, IFOM, triggering, comprising: in a process of establishing a packet data network,
a User Equipment, UE, transmitting information related to an IFOM operation mode to a network side, wherein the information related to the IFOM operation mode is used by the network side to decide the IFOM operation mode, and
receiving indication information of the IFOM operation mode decided by the network side.

2. The method for implementing IFOM triggering according to claim 1, wherein the information related to the IFOM operation mode comprises: an IFOM operation mode supported by the UE or a request for an IFOM operation mode; wherein,
the IFOM operation mode supported by the UE comprises UE-initiated IFOM supported by the UE, network-initiated IFOM supported by the UE, and UE-initiated IFOM and network-initiated IFOM supported by the UE.

3. The method for implementing IFOM triggering according to claim 1, wherein in an Extensible Authentication Protocol, EAP, authentication and authorization phase in which the UE establishes a Packet Data Network, PDN, connection through a Trusted Wireless Access Network, TWAN, for implementation of Network-Based IP Flow Mobility, NB-IFOM, the UE and the network side use a single connection mode, the UE transmitting the information related to the IFOM operation mode comprises the UE transmitting the information related to the IFOM operation mode to the network side, wherein the information is carried in an EAP message; and/or
receiving the indication information of the IFOM operation mode decided by the network side comprises: the UE receiving the indication information of the IFOM operation mode decided by the network side which is transmitted by the network side, wherein the indication information is carried in an Authentication and Key Agreement notification, AKA'- notification, message.

4. The method for implementing IFOM triggering according to claim 1, wherein the UE establishes a PDN connection through an untrusted WLAN access Network for implementation of NB-IFOM, the UE transmitting the information related to the IFOM operation mode comprises the UE transmitting the information related to the IFOM operation mode to the network side, wherein the information is carried in an Internet Key Exchange Authentication, IKE_AUTH, request message or is carried in an IKEv2 message; and/or
receiving the indication information of the IFOM operation mode decided by the network side comprises: the UE receiving the indication information of the IFOM operation mode decided by the network side which is transmitted by the network side, wherein the indication information is transmitted by a PDN GateWay, PGW, to the UE via an ePDG which carries the indication information in an IKE_AUTH response message.

5. The method for implementing IFOM triggering according to claim 1, wherein the UE is initially attached to an Evolved Packet System, EPS, network via an Evolved Universal Terrestrial Radio Access Network, E-UTRAN, the UE transmitting the information related to the IFOM operation mode comprises: the UE transmitting the information related to the IFOM operation mode to a Mobility Management Entity, MME, wherein the information is included and carried in an NAS message; and/or
receiving the indication information of the IFOM operation mode decided by the network side comprises: the UE receiving the indication information of the IFOM operation mode decided by the network side which is transmitted by the MME, wherein the indication information is carried in an attach acceptance message.

6. The method for implementing IFOM triggering according to claim 1, wherein when the UE establishes a PDN connection through a TWAN for implementation of NB-IFOM, the UE and the network side use a multi-connection mode, the UE transmitting the information related to the IFOM operation mode comprises: the UE transmitting the information related to the IFOM operation mode to a Packet Data Network GateWay, PDN GW, wherein the information is carried in a Wireless LAN Control Plane Protocol, WLCP, PDN connection establishment request message; and/or
receiving the indication information of the IFOM operation mode decided by the network side comprises: the UE receiving the indication information of the IFOM operation mode decided by the network side which is transmitted by the PDN GW or a Policy and Charging Rules Function, PCRF, wherein the indication information is carried in a session establishment response message or proxy binding acknowledgement message.

7. A method for implementing IP flow mobility, IFOM, triggering, comprising: in a process of establishing a packet data network,
a network side deciding an IFOM operation mode; and
transmitting indication information of the decided IFOM operation mode to a User Equipment, UE, wherein the indication information is used to notify the UE of a manner of initiating modification of a service flow routing rule, which comprises initiating modification of the service flow routing rule by the UE and/or initiating modification of the service flow routing rule by the network side.

8. The method for implementing IFOM triggering according to claim 7, wherein in an Extensible Authentication Protocol, EAP, authentication and authorization phase in which the UE establishes a Packet Data Network, PDN, connection through a Trusted Wireless Access Network, TWAN, for implementation of Network-Based IP Flow Mobility, NB-IFOM, the UE and the network side use a single connection mode, the network side deciding an IFOM operation mode comprises a Packet Data Network GateWay, PDN GW or a Policy and Charging Rules Function, PCRF, at the network side deciding the IFOM operation mode; and/or
the network side transmitting indication information of the decided IFOM operation mode comprises the PDN GW or PCRF at the network side carrying the decided IFOM operation mode in an EAP message and transmitting the EAP message to the UE through a TWAN and a 3GPP Authentication Authorization Accounting, AAA, server.

9. The method for implementing IFOM triggering according to claim 7, wherein the UE establishes a PDN connection through an untrusted WLAN access network for implementation of NB-IFOM, the network side deciding an IFOM operation mode comprises a PDN GW or a PCRF at the network side deciding the IFOM operation mode; and/or
the network side transmitting indication information of the decided IFOM operation mode comprises the PDN GW or PCRF at the network side carrying the decided IFOM operation mode in an IKEv2 message and transmitting the IKEv2 message to the UE through an ePDG.

10. The method for implementing IFOM triggering according to claim 7, wherein the UE is initially attached to an Evolved Packet System, EPS, network via an Evolved Universal Terrestrial Radio Access Network, E-UTRAN, the network side deciding an IFOM operation mode comprises a PDN GW or a PCRF at the network side deciding the IFOM operation mode; and/or
the network side transmitting indication information of the decided IFOM operation mode comprises the PDN GW or PCRF at the network side transmitting the decided IFOM operation mode to the UE through a session establishment response message via a Serving Gateway, S-GW, and an MME.

11. The method for implementing IFOM triggering according to claim 7, wherein the UE establishes a PDN connection through a TWAN for implementation of NB-IFOM, the UE and the network side use a multi-connection mode, the network side deciding an IFOM operation mode comprises a PDN GW or a PCRF at the network side deciding the IFOM operation mode; and/or
the network side transmitting indication information of the decided IFOM operation mode comprises the PDN GW or PCRF at the network side transmitting the decided IFOM operation mode to the UE through an EAP or WLCP message via a TWAN.

12. The method for implementing IFOM triggering according to claim 7, wherein in an EAP authentication and authorization phase in which the UE establishes a PDN connection through a TWAN for implementation of NB-IFOM, the UE and the network side use a single connection mode, the network side deciding an IFOM operation mode comprises a 3GPP Authentication Authorization Accounting, AAA, server at the network side deciding the IFOM operation mode; and/or
the network side transmitting indication information of the decided IFOM operation mode comprises the 3GPP AAA server at the network side carrying the decided IFOM operation mode in an Authentication and Key Agreement notification, AKA'-notification, message and transmitting the AKA'-notification message to the UE through a TWAN.

13. The method for implementing IFOM triggering according to claim 7, wherein the UE establishes a PDN connection through an untrusted WLAN for implementation of NB-IFOM, the network side deciding an IFOM operation mode comprises a 3GPP AAA server at the network side deciding the IFOM operation mode; and
the network side transmitting indication information of the decided IFOM operation mode comprises the 3GPP AAA server at the network side carrying the decided IFOM operation mode in an EAP AKA message and transmitting the EAP AKA message to the UE through an ePDG.

14. A UE, comprising: a first transmission module and a first reception module, wherein
the first transmission module is arranged to transmit information related to an IP flow mobility, IFOM, operation mode to a network side, wherein information related to the IFOM operation mode is used by a network side to decide the IFOM operation mode, and
the first reception module is arranged to receive indication information of the IFOM operation mode decided by the network side.

15. The UE according to claim 14, wherein the information related to the IFOM operation mode comprises: an IFOM operation mode supported by the UE or a request for an IFOM operation mode; wherein,
the IFOM operation mode supported by the UE comprises UE-initiated IFOM supported by the UE, network-initiated IFOM supported by the UE, and UE-initiated IFOM and network-initiated IFOM supported by the UE.

16. The UE according to claim 14, wherein in an Extensible Authentication Protocol, EAP, authentication and authorization phase in which the UE establishes a Packet Data Network, PDN, connection through a Trusted Wireless Access Network, TWAN, for implementation of Network-Based IP Flow Mobility, NB-IFOM, the UE and the network side use a single connection mode,
the first transmission module is arranged to transmit the information related to the IFOM operation mode to the network side, wherein the information is carried in an EAP message; and/or
the first reception module is arranged to receive the indication information of the IFOM operation mode decided by the network side which is transmitted by the network side, wherein the indication information is carried in an Authentication and Key Agreement notification, AKA'-notification, message.

17. The UE according to claim 14, wherein the UE establishes a PDN connection through an untrusted WLAN for implementation of NB-IFOM, the first transmission module is arranged to transmit the information related to the IFOM operation mode to the network side, wherein the information is carried in an Internet Key Exchange Authentication, IKE_AUTH, request message or is carried in an IKEv2 message; and/or
the first reception module is arranged to receive the indication information of the IFOM operation mode decided by the network side which is transmitted by the network side, wherein the indication information is transmitted by a PDN GateWay, PGW, to the UE via an ePDG which carries the indication information in an IKE_AUTH response message.

18. The UE according to claim 17, wherein when the network side performs dynamic IP mobility management and selection, the IKE AUTH request message is transmitted by the UE to the ePDG.

19. The UE according to claim 14, wherein the UE is initially attached to an Evolved Packet System, EPS, network via an Evolved Universal Terrestrial Radio Access Network, E-UTRAN, the first transmission module is arranged to transmit the information related to the IFOM operation mode to a Mobility Management Entity, MME, wherein the information is carried in an NAS message; and/or
the first reception module is arranged to receive the indication information of the IFOM operation mode decided by the network side which is transmitted by the MME, wherein the indication information is carried in an attach acceptance message.

20. The UE according to claim 14, wherein when the UE establishes a PDN connection through a TWAN for implementation of NB-IFOM, the UE and the network side use a multi-connection mode, the first transmission module is arranged to transmit the information related to the IFOM operation mode to a Packet Data Network GateWay, PDN GW, wherein the information is carried in a Wireless LAN Control Plane Protocol, WLCP, PDN connection establishment request message; and/or
the first reception module is arranged to receive the indication information of the IFOM operation mode decided by the network side which is transmitted by the PDN GW or a Policy and Charging Rules Function, PCRF, wherein the indication information is carried in a session establishment response message or proxy binding acknowledgement message.

21. A device for implementing IP flow mobility, IFOM, triggering, comprising: a first decision module and a second transmission module, wherein
the first decision module is arranged to decide an IFOM operation mode; and
the second transmission module is arranged to transmit indication information of the decided IFOM operation mode to a User Equipment, UE, wherein the indication information is used by the UE to modify a service flow routing path.

22. The device for implementing IFOM triggering according to claim 21, further comprising: a second reception module arranged to receive information related to the IFOM operation mode.

23. The device for implementing IFOM triggering according to claim 21, wherein in an Extensible Authentication Protocol, EAP authentication and authorization phase in which the UE establishes a Packet Data Network, PDN, connection through a Trusted Wireless Access Network, TWAN, for implementation of Network-Based IP Flow Mobility, NB-IFOM, the UE and the network side use a single connection mode, and when the device is a Packet Data Network GateWay, PDN GW or a Policy and Charging Rules Function, PCRF, the second transmission module is arranged to carry the decided IFOM operation mode in an EAP message and transmit the EAP message to the UE through a TWAN and a 3GPP Authentication Authorization Accounting, AAA, server.

24. The device for implementing IFOM triggering according to claim 21, wherein the UE establishes a PDN connection through an untrusted WLAN for implementation of NB-IFOM, and when the device is a PDN GW or a PCRF, the second transmission module is arranged to carry the decided IFOM operation mode in an IKEv2 message and transmit the IKEv2 message to the UE through an ePDG.

25. The device for implementing IFOM triggering according to claim 21, wherein the UE is initially attached to an Evolved Packet System, EPS, network via an Evolved Universal Terrestrial Radio Access Network, E-UTRAN, and when the device is a PDN GW or a PCRF, the second transmission module is arranged to carry the decided IFOM operation mode in a Protocol Configuration Options, PCO, information element or as an independent information element, and transmit the decided IFOM operation mode to the UE through a session establishment response message via a Serving Gateway, S-GW, and an MME.

26. The device for implementing IFOM triggering according to claim 21, wherein the UE establishes a PDN connection through a TWAN for implementation of NB-IFOM, the UE and the network side use a multi-connection mode, and when the device is a PDN GW or a PCRF, the second transmission module is arranged to carry the decided IFOM operation mode in a PCO information element or as an independent information element, and transmit the decided IFOM operation mode to the UE through an EAP or WLCP message via a TWAN.

27. The device for implementing IFOM triggering according to claim 21, wherein in an EAP authentication and authorization phase in which the UE establishes a PDN connection through a TWAN for implementation of NB-IFOM, the UE and the network side use a single connection mode, and when the device is a 3GGP Authentication Authorization Accounting, AAA, server, the second transmission module is arranged to carry the decided IFOM operation mode in an EAP message and transmit the EAP message to the UE through a TWAN.

28. The device for implementing IFOM triggering according to claim 21, wherein the UE establishes a PDN connection through an untrusted WLAN for implementation of NB-IFOM, and when the device is a 3GGP AAA server, the second transmission module is arranged to carry the decided IFOM operation mode in an EAP AKA message and transmit the EAP AKA message to the UE through an ePDG.

29. A computer storage medium having stored therein computer-executable instructions for performing the method for implementing IFOM triggering according to any one of claims 1-6.

30. A computer storage medium having stored therein computer-executable instructions for performing the method for implementing IFOM triggering according to any one of claims 7-13.
